# EUROPEAN PATENT APPLICATION

(11) **EP 4 637 202 A1**
(43) Date of publication of application: **22.10.2025**
(21) Application number: 23914449.6
(22) Date of filing: 04.12.2023
(51) Int. Cl.: H04W 24/02

(54) **COMMUNICATION METHOD AND COMMUNICATION APPARATUS**

(30) Priority: 04.01.2023 CN 202310007285
(71) Applicant: Huawei Technologies Co., Ltd., Shenzhen, Guangdong 518129 (CN)
(72) Inventor: GUO, Longhua, Shenzhen, Guangdong 518129 (CN); WU, Rong, Shenzhen, Guangdong 518129 (CN)
(74) Representative: Isarpatent
(86) International application number: PCT/CN2023/136042
(87) International publication number: WO 2024/146315

(57) **Abstract**

A communication method is provided, including: A storage function network element in a second network receives a first request message that is from a gateway mobile location center GMLC in a first network and that is used to request to obtain data of a terminal device, where the first request message includes an identifier of the terminal device. In response to the first request message, the storage function network element determines whether the first network is a network that is allowed to obtain the data of the terminal device, and obtains a determining result. Further, based on the determining result, the storage function network element determines whether to send the data of the terminal device to the GMLC. After receiving the first request message sent by the GMLC in the first network, the storage function network element in the second network determines whether the first network is a network that is allowed to obtain the data of the terminal device, and then determines, based on the determining result, whether to send the data of the terminal device to the GMLC, so that data security is improved.

## Description

This application claims priority to Chinese Patent Application No. 202310007285.0, filed with the China National Intellectual Property Administration on January 4, 2023 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

Currently, a 5th generation (5th generation, 5G) communication system provides a location service in a non-public network (location service in PNINPN) (which may also be referred to as local location). The PNINPN is a public network integrated non-public network (Public Network Integrated Non-Public Network).

In a location method for a location service based on a non-public network, after receiving a location service request, a gateway mobile location center (Gateway Mobile Location Center, GMLC) may obtain privacy data of a terminal device from a unified data management (Unified Data Management, UDM) network element. The GMLC belongs to a non-public network, and the UDM belongs to a public network. The non-public network and the public network belong to different security domains. In this location method, the non-public network may actively obtain user data in the public network through an existing interface. This may cause leakage of the user data stored in the public network.

Therefore, how to improve location security of a location service that is based on a non-public network becomes an urgent problem to be resolved.

### SUMMARY

Embodiments of this application provide a communication method, to improve location security of a location service that is based on a non-public network.

According to a first aspect, a communication method is provided, including: A gateway mobile location center GMLC in a first network sends a first request message to a storage function network element in a second network, where the first request message includes an identifier of a terminal device, and the first request message is used to request to obtain data of the terminal device; the storage function network element determines, in response to the first request message, whether the first network is a network that is allowed to obtain the data of the terminal device; and the storage function network element determines, based on a determining result, whether to send the data of the terminal device to the GMLC.

According to a second aspect, a communication method is provided. The method may be performed by a storage function network element in a second network, or may be performed by a component (for example, a chip or a circuit) of the storage function network element. This is not limited herein. For ease of description, the following uses an example in which the method is performed by the storage function network element for description.

The communication method includes: The storage function network element in the second network receives a first request message from a gateway mobile location center GMLC in a first network, where the first request message includes an identifier of a terminal device, and the first request message is used to request to obtain data of the terminal device; the storage function network element determines, in response to the first request message, whether the first network is a network that is allowed to obtain the data of the terminal device; and the storage function network element determines, based on a determining result, whether to send the data of the terminal device to the GMLC.

Based on the foregoing technical solution, after the storage function network element in the second network receives the request message that is sent by the GMLC in the first network and that is for requesting to obtain the data of the terminal device, the storage function network element first determines whether the first network is a network that is allowed to obtain the data of the terminal device, and then determines, based on the determining result, whether to send the data of the terminal device to the GMLC, to avoid leakage of user data in the second network that is caused when the GMLC in the first network directly and actively obtains the data of the terminal device from the storage function network element in the second network through an existing interface. Therefore, data security is improved.

For example, when the foregoing technical solution is applied to a local location scenario, after receiving a request message that is sent by a GMLC in a non-public network and that is for obtaining data of a terminal device, a storage function network element in a public network determines whether the non-public network is a network that is allowed to obtain the data of the terminal device, and then determines whether to send the data of the terminal device to the GMLC, so that location security of a location service based on the non-public network can be improved.

With reference to the first aspect or the second aspect, in some implementations of the first aspect or the second aspect, before the storage function network element determines, whether the first network is a network that is allowed to obtain the data of the terminal device, the method further includes: The storage function network element determines that the GMLC and the storage function network element belong to different network domains.

Based on the foregoing technical solution, before determining whether the first network is a network that is allowed to obtain the data of the terminal device, the storage function network element in the second network first determines that the GMLC that sends the request message for requesting to obtain the data of the terminal device and the storage function network element belong to different network domains. To be specific, when determining that the GMLC and the storage function network element belong to different network domains, the storage function network element determines whether the first network is a network that is allowed to obtain the data of the terminal device, to avoid a case in which when the GMLC and the storage function network element belong to a same network domain, the storage function network element still determines whether the first network is a network that is allowed to obtain the data of the terminal device. This avoids unnecessary resource overheads.

With reference to the first aspect or the second aspect, in some implementations of the first aspect or the second aspect, that the storage function network element determines that the GMLC and the storage function network element belong to different network domains includes any one of the following: The storage function network element determines, based on an identifier of the first network included in the first request message, that the GMLC and the storage function network element belong to different network domains; the storage function network element determines an identifier of the first network based on an internet protocol IP address of the GMLC, and determines, based on the identifier of the first network, that the GMLC and the storage function network element belong to different network domains; or the storage function network element determines an identifier of the first network based on a certificate of the GMLC, and determines, based on the identifier of the first network, that the GMLC and the storage function network element belong to different network domains.

Based on the foregoing technical solution, the storage function network element in the second network may determine, in different manners, that the GMLC and the storage function network element belong to different network domains, improving flexibility of the solutions.

With reference to the first aspect or the second aspect, in some implementations of the first aspect or the second aspect, that the storage function network element determines whether the first network is a network that is allowed to obtain the data of the terminal device includes: The storage function network element determines, based on local configuration information, whether the first network is a network that is allowed to obtain the data of the terminal device, where the configuration information includes a list of identifiers of networks that are allowed to obtain the data of the terminal device.

Based on the foregoing technical solution, the storage function network element in the second network may determine, based on the local configuration information, whether the first network is a network that is allowed to obtain the data of the terminal device, without obtaining, from another network element, information needed for determining whether the first network is a network that is allowed to obtain the data of the terminal device. This simplifies a procedure of the solutions.

With reference to the first aspect or the second aspect, in some implementations of the first aspect or the second aspect, that the storage function network element determines, based on the local configuration information, whether the first network is a network that is allowed to obtain the data of the terminal device includes: If the identifier of the first network belongs to the list of identifiers of networks that are allowed to obtain the data of the terminal device, the storage function network element determines that the first network is a network that is allowed to obtain the data of the terminal device; or if the identifier of the first network does not belong to the list of identifiers of networks that are allowed to obtain the data of the terminal device, the storage function network element determines that the first network is a network that is not allowed to obtain the data of the terminal device.

With reference to the first aspect or the second aspect, in some implementations of the first aspect or the second aspect, that the storage function network element determines whether the first network is a network that is allowed to obtain the data of the terminal device includes: The storage function network element determines, based on a correspondence between a mobility management network element serving the terminal device and a mobility management network element corresponding to the first network, whether the first network is a network that is allowed to obtain the data of the terminal device. Specifically, the mobility management network element corresponding to the first network may be determined based on second configuration information. The second configuration information includes a correspondence between an identifier of at least one network and an identifier of at least one mobility management network element in the second network.

With reference to the first aspect or the second aspect, in some implementations of the first aspect or the second aspect, that the storage function network element determines, based on the correspondence between a mobility management network element serving the terminal device and a mobility management network element corresponding to the first network, whether the first network is a network that is allowed to obtain the data of the terminal device includes: If the mobility management network element serving the terminal device is a subset of the mobility management network element corresponding to the first network, the storage function network element determines that the first network is a network that is allowed to obtain the data of the terminal device; or if the mobility management network element serving the terminal device is not a subset of the mobility management network element corresponding to the first network, the storage function network element determines that the first network is a network that is not allowed to obtain the data of the terminal device.

With reference to the first aspect or the second aspect, in some implementations of the first aspect or the second aspect, that the storage function network element determines, based on the determining result, whether to send the data of the terminal device to the GMLC includes: When the determining result is that the first network is a network that is not allowed to obtain the data of the terminal device, the storage function network element rejects sending the data of the terminal device to the GMLC.

With reference to the first aspect or the second aspect, in some implementations of the first aspect or the second aspect, that the storage function network element determines, based on the determining result, whether to send the data of the terminal device to the GMLC includes: When the determining result is that the first network is a network that is not allowed to obtain the data of the terminal device, the storage function network element sends a generic public subscription identifier GPSI or a pseudonym of the terminal device to the GMLC.

With reference to the first aspect or the second aspect, in some implementations of the first aspect or the second aspect, that the storage function network element determines, based on the determining result, whether to send the data of the terminal device to the GMLC includes: When the determining result is that the first network is a network that is allowed to obtain the data of the terminal device, the storage function network element sends the data of the terminal device to the GMLC.

With reference to the first aspect or the second aspect, in some implementations of the first aspect or the second aspect, the data of the terminal device includes at least one of the following: a subscription permanent identifier SUPI of the terminal device, a privacy setting of the terminal device, or an address of the mobility management network element serving the terminal device.

With reference to the first aspect or the second aspect, in some implementations of the first aspect or the second aspect, the second network is a public network, and the first network is a local network.

According to a third aspect, a communication apparatus is provided, configured to implement the method shown in the second aspect. The apparatus includes: a transceiver module, configured to receive a first request message from a gateway mobile location center GMLC in a first network, where the first request message includes an identifier of a terminal device, and the first request message is used to request to obtain data of the terminal device; and a processing module, configured to determine, in response to the first request message, whether the first network is a network that is allowed to obtain the data of the terminal device, where the processing module is further configured to determine, based on a determining result, whether to send the data of the terminal device to the GMLC.

With reference to the third aspect, in some implementations of the third aspect, before the processing module determines whether the first network is a network that is allowed to obtain the data of the terminal device, the processing module is further configured to determine that the GMLC and the communication apparatus belong to different network domains.

With reference to the third aspect, in some implementations of the third aspect, that the processing module determines that the GMLC and the communication apparatus belong to different network domains includes any one of the following: The processing module determines, based on an identifier of the first network included in the first request message, that the GMLC and the communication apparatus belong to different network domains; the processing module determines an identifier of the first network based on an internet protocol IP address of the GMLC, and determines, based on the identifier of the first network, that the GMLC and the communication apparatus belong to different network domains; or the processing module determines an identifier of the first network based on a certificate of the GMLC, and determines, based on the identifier of the first network, that the GMLC and the communication apparatus belong to different network domains.

With reference to the third aspect, in some implementations of the third aspect, that the processing module determines whether the first network is a network that is allowed to obtain the data of the terminal device includes: The processing module determines, based on local configuration information, whether the first network is a network that is allowed to obtain the data of the terminal device, where the configuration information includes a list of identifiers of networks that are allowed to obtain the data of the terminal device.

With reference to the third aspect, in some implementations of the third aspect, that the processing module determines, based on the local configuration information, whether the first network is a network that is allowed to obtain the data of the terminal device includes: If the identifier of the first network belongs to the list of identifiers of networks that are allowed to obtain the data of the terminal device, the processing module determines that the first network is a network that is allowed to obtain the data of the terminal device; or if the identifier of the first network does not belong to the list of identifiers of networks that are allowed to obtain the data of the terminal device, the processing module determines that the first network is a network that is not allowed to obtain the data of the terminal device.

With reference to the third aspect, in some implementations of the third aspect, that the processing module determines whether the first network is a network that is allowed to obtain the data of the terminal device includes: The processing module determines, based on a correspondence between a mobility management network element serving the terminal device and a mobility management network element corresponding to the first network, whether the first network is a network that is allowed to obtain the data of the terminal device.

With reference to the third aspect, in some implementations of the third aspect, that the processing module determines, based on the correspondence between a mobility management network element serving the terminal device and a mobility management network element corresponding to the first network, whether the first network is a network that is allowed to obtain the data of the terminal device includes: If the mobility management network element serving the terminal device is a subset of the mobility management network element corresponding to the first network, the processing module determines that the first network is a network that is allowed to obtain the data of the terminal device; or if the mobility management network element serving the terminal device is not a subset of the mobility management network element corresponding to the first network, the processing module determines that the first network is a network that is not allowed to obtain the data of the terminal device.

With reference to the third aspect, in some implementations of the third aspect, that the processing module determines, based on the determining result, whether to send the data of the terminal device to the GMLC includes: When the determining result is that the first network is a network that is not allowed to obtain the data of the terminal device, the processing module rejects sending the data of the terminal device to the GMLC.

With reference to the third aspect, in some implementations of the third aspect, that the processing module determines, based on the determining result, whether to send the data of the terminal device to the GMLC includes: When the determining result is that the first network is a network that is not allowed to obtain the data of the terminal device, the transceiver module is further configured to send a generic public subscription identifier GPSI or a pseudonym of the terminal device to the GMLC.

With reference to the third aspect, in some implementations of the third aspect, that the processing module determines, based on the determining result, whether to send the data of the terminal device to the GMLC includes: When the determining result is that the first network is a network that is allowed to obtain the data of the terminal device, the transceiver module is further configured to send the data of the terminal device to the GMLC.

With reference to the third aspect, in some implementations of the third aspect, the data of the terminal device includes at least one of the following: a subscription permanent identifier SUPI of the terminal device, a privacy setting of the terminal device, or an address of the mobility management network element serving the terminal device.

With reference to the third aspect, in some implementations of the third aspect, the second network is a public network, and the first network is a local network.

According to a fourth aspect, a communication method is provided. The method may be performed by a first network element in a second network, or may be performed by a component (for example, a chip or a circuit) of the first network element. This is not limited herein. For ease of description, the following uses an example in which the method is performed by the first network element for description.

The communication method includes: The first network element in the second network receives a first request message from a second network element in a first network, where the first request message includes an identifier of a terminal device, and the first request message is used to request to obtain data of the terminal device; and the first network element sends a first response message in response to the first request message to the second network element, where information included in the first response message is determined based on a verification result, and the verification result indicates whether the first network is a network that is allowed to obtain the data of the terminal device.

Based on the foregoing technical solution, after the first network element in the second network receives the request message that is sent by the second network element in the first network and that is for requesting to obtain the data of the terminal device, the information included in the first response message sent by the first network element to the second network element is determined based on the verification result, and the verification result indicates whether the first network is a network that is allowed to obtain the data of the terminal device, to avoid leakage of user data in the second network that is caused when the second network element in the first network directly and actively obtains the data of the terminal device through an existing interface. Therefore, data security is improved.

With reference to the fourth aspect, in some implementations of the fourth aspect, when the first network is a network that is allowed to obtain the data of the terminal device, the first response message includes a part or all of the data of the terminal device.

With reference to the fourth aspect, in some implementations of the fourth aspect, when the first network is a network that is not allowed to obtain the data of the terminal device, the first response message is used to reject providing the data of the terminal device.

With reference to the fourth aspect, in some implementations of the fourth aspect, when the first network is a network that is not allowed to obtain the data of the terminal device, the first response message includes a generic public subscription identifier GPSI or a pseudonym of the terminal device.

With reference to the fourth aspect, in some implementations of the fourth aspect, before the first network element sends the first response message to the second network element, the method further includes: The first network element determines the verification result; or the first network element receives the verification result from a storage function network element in the second network.

With reference to the fourth aspect, in some implementations of the fourth aspect, that the first network element determines the verification result includes: The first network element determines the verification result based on first information, where the first information includes subscription data of the terminal device and/or a list of identifiers of terminal devices that allow the first network to obtain data, the subscription data of the terminal device includes a correspondence between the identifier of the terminal device and an identifier of at least one network, and the at least one network is a network that is allowed to obtain the data of the terminal device.

With reference to the fourth aspect, in some implementations of the fourth aspect, before the first network element determines the verification result, the method further includes: The first network element sends a second request message to the storage function network element in the second network, where the second request message includes the identifier of the terminal device and/or an identifier of the second network, and the second request message is used to request to obtain the first information; and the first network element receives the first information from the storage function network element.

With reference to the fourth aspect, in some implementations of the fourth aspect, that the first network element determines the verification result based on the subscription data of the terminal device includes: If an identifier of the first network is one of the identifier of the at least one network, the first network element determines that the first network is a network that is allowed to obtain the data of the terminal device; if an identifier of the first network is not one of the identifier of the at least one network, the first network element determines that the first network is a network that is not allowed to obtain the data of the terminal device; if the identifier of the terminal device is one of the list of identifiers of terminal devices that allow the first network to obtain data, the first network element determines that the first network is a network that is allowed to obtain the data of the terminal device; or if the identifier of the terminal device is not one of the list of identifiers of terminal devices that allow the first network to obtain data, the first network element determines that the first network is a network that is not allowed to obtain the data of the terminal device.

With reference to the fourth aspect, in some implementations of the fourth aspect, that the first network element determines the verification result includes: The first network element determines the verification result based on an application scope of the data of the terminal device and an application scope of the first network, where the subscription data of the terminal device includes information about the application scope of the data of the terminal device, the application scope of the first network is determined based on first configuration information, and the first configuration information includes information about an application scope of at least one network.

With reference to the fourth aspect, in some implementations of the fourth aspect, before the first network element determines the verification result, the method further includes: The first network element sends a third request message to the storage function network element in the second network, where the third request message includes the identifier of the terminal device, and the third request message is used to request to obtain the subscription data of the terminal device; and the first network element receives the subscription data of the terminal device from the storage function network element.

With reference to the fourth aspect, in some implementations of the fourth aspect, before the first network element determines the verification result, the method further includes: The first network element sends a fourth request message to the storage function network element in the second network, where the fourth request message includes the identifier of the first network, and the fourth request message is used to request to obtain information about the application scope of the first network; and the first network element receives the information about the application scope of the first network from the storage function network element.

With reference to the fourth aspect, in some implementations of the fourth aspect, the data of the terminal device includes first data and second data, an application scope of the first data is a first scope, an application scope of the second data is a second scope, and that the first network element determines the verification result based on the application scope of the data of the terminal device and the application scope of the first network includes: If an intersection set exists between the application scope of the first network and the first scope, the first network element determines that the first network is a network that is allowed to obtain the first data, where the first response message includes the first data; if an intersection set exists between the application scope of the first network and the second scope, the first network element determines that the first network is a network that is allowed to obtain the second data, where the first response message includes the second data; if an intersection set exists between the application scope of the first network and each of the first scope and the second scope, the first network element determines that the first network is a network that is allowed to obtain the first data and the second data, where the first response message includes the first data and the second data; or if no intersection set exists between the application scope of the first network and the application scope of the data of the terminal device, the first network element determines that the first network is a network that is not allowed to obtain the data of the terminal device.

With reference to the fourth aspect, in some implementations of the fourth aspect, that the first network element determines the verification result includes: The first network element determines the verification result based on a mobility management network element serving the terminal device and a mobility management network element corresponding to the first network, where the mobility management network element corresponding to the first network is determined based on second configuration information, and the second configuration information includes a correspondence between an identifier of at least one network and an identifier of at least one mobility management network element in the second network.

With reference to the fourth aspect, in some implementations of the fourth aspect, before the first network element determines the verification result, the method further includes: The first network element sends a fifth request message to the storage function network element in the second network, where the fifth request message includes the identifier of the first network, and the fifth request message is used to request to obtain an identifier of the mobility management network element corresponding to the first network; and the first network element receives the identifier of the mobility management network element corresponding to the first network from the storage function network element.

With reference to the fourth aspect, in some implementations of the fourth aspect, that the first network element determines the verification result based on a relationship between the mobility management network element corresponding to the first network and the mobility management network element serving the terminal device includes: If the mobility management network element serving the terminal device is a subset of the mobility management network element corresponding to the first network, the first network element determines that the first network is a network that is allowed to obtain the data of the terminal device; or if the mobility management network element serving the terminal device is not a subset of the mobility management network element corresponding to the first network, the first network element determines that the first network is a network that is not allowed to obtain the data of the terminal device.

With reference to the fourth aspect, in some implementations of the fourth aspect, before the first network element receives the verification result from a storage function network element in the first network, the method further includes: The first network element sends a sixth request message to the storage function network element, where the sixth request message includes the identifier of the first network and/or an identifier of the target terminal device, and the sixth request message is used to request to obtain the verification result.

With reference to the fourth aspect, in some implementations of the fourth aspect, the data of the terminal device includes at least one of the following: a subscription permanent identifier SUPI of the terminal device, a privacy setting of the terminal device, or the mobility management network element serving the terminal device.

With reference to the fourth aspect, in some implementations of the fourth aspect, the second network is a public network, and the first network is a local network.

With reference to the fourth aspect, in some implementations of the fourth aspect, the first network element is a unified data management function network element UDM, an authentication server function network element AUSF, or a network data analytics function network element NWDAF; and the second network element is a gateway mobile location center GMLC, a mobility management function network element AMF, or a session management function network element SMF.

According to a fifth aspect, a communication method is provided, including: A gateway mobile location center GMLC in a first network sends a first request message to a storage function network element in a second network, where the first request message includes an identifier of a terminal device, and the first request message is used to request to obtain data of the terminal device; and the storage function network element determines, based on an application scope of the data of the terminal device and an application scope of the first network, information included in a first response message sent to the GMLC, where subscription data of the terminal device includes information about the application scope of the data of the terminal device, the application scope of the first network is determined based on first configuration information, and the first configuration information includes information about an application scope of at least one network.

With reference to the fifth aspect, in some implementations of the fifth aspect, the data of the terminal device includes first data and second data, an application scope of the first data is a first scope, an application scope of the second data is a second scope, and that the storage function network element determines, based on the application scope of the data of the terminal device and the application scope of the first network, the information included in the first response message sent to the GMLC includes: If an intersection set exists between the application scope of the first network and the first scope, the storage function network element determines that the first response message includes the first data; if an intersection set exists between the application scope of the first network and the second scope, the storage function network element determines that the first response message includes the second data; if an intersection set exists between the application scope of the first network and each of the first scope and the second scope, the storage function network element determines that the first response message includes the first data and the second data; or if no intersection set exists between the application scope of the first network and the application scope of the data of the terminal device, the storage function network element determines that the first response message includes information about rejecting providing the data of the terminal device.

According to a sixth aspect, a communication method is provided, including: A gateway mobile location center GMLC in a first network sends a first request message to a storage function network element in a second network, where the first request message includes an identifier of a terminal device, and the first request message is used to request to obtain data of the terminal device; and the storage function network element determines, based on a mobility management network element serving the terminal device and a mobility management network element corresponding to the first network, whether to allow sending the data of the terminal device to the first network, where the mobility management network element corresponding to the first network is determined based on second configuration information, and the second configuration information includes a correspondence between an identifier of at least one network and an identifier of at least one mobility management network element in the second network.

With reference to the sixth aspect, in some implementations of the sixth aspect, that the storage function network element determines, based on a relationship between the mobility management network element corresponding to the first network and the mobility management network element serving the terminal device, whether to allow sending the data of the terminal device to the first network includes: If the mobility management network element serving the terminal device is a subset of the mobility management network element corresponding to the first network, the storage function network element determines to allow sending the data of the terminal device to the first network; or if the mobility management network element serving the terminal device is not a subset of the mobility management network element corresponding to the first network, the storage function network element determines not to allow sending the data of the terminal device to the first network.

With reference to the sixth aspect, in some implementations of the sixth aspect, when the storage function network element determines to allow sending the data of the terminal device to the first network, the method further includes: The storage function network element sends a first response message in response to the first request message to the GMLC, where the first response message includes the data of the terminal device.

With reference to the sixth aspect, in some implementations of the sixth aspect, when the storage function network element determines not to allow sending the data of the terminal device to the first network, the method further includes: The storage function network element sends a first response message in response to the first request message to the GMLC, where the first response message is used to reject providing the data of the terminal device.

With reference to the sixth aspect, in some implementations of the sixth aspect, when the storage function network element determines not to allow sending the data of the terminal device to the first network, the method further includes: The storage function network element sends a first response message in response to the first request message to the GMLC, where the first response message includes a generic public subscription identifier GPSI or a pseudonym of the terminal device.

According to a seventh aspect, a communication method is provided, including: A gateway mobile location center GMLC in a first network sends a first request message to a first network element in a second network, where the first request message includes an identifier of a terminal device, and the first request message is used to request to obtain data of the terminal device; the first network element sends a second request message to a storage function network element in the second network, where the second request message includes the identifier of the terminal device and/or an identifier of the second network, the second request message is used to request to obtain first information, and the first information includes subscription data of the terminal device and/or a list of identifiers of terminal devices that allow the first network to obtain data; the storage function network element sends the first information to the first network element; the first network element determines a verification result based on the first information, where the verification result indicates whether the first network is a network that is allowed to obtain the data of the terminal device; and the first network element sends a first response message in response to the first request message to the second network element, where information included in the first response message is determined based on the verification result.

With reference to the seventh aspect, in some implementations of the seventh aspect, the method further includes: The storage function network element determines, based on the subscription data of the at least one terminal device and the identifier of the second network, the list of identifiers of terminal devices that allow the second network to obtain data.

With reference to the seventh aspect, in some implementations of the seventh aspect, when the first network is a network that is allowed to obtain the data of the terminal device, the first response message includes the data of the terminal device.

With reference to the seventh aspect, in some implementations of the seventh aspect, when the first network is a network that is not allowed to obtain the data of the terminal device, the first response message is used to reject providing the data of the terminal device.

With reference to the seventh aspect, in some implementations of the seventh aspect, when the first network is a network that is not allowed to obtain the data of the terminal device, the first response message includes a generic public subscription identifier GPSI or a pseudonym of the terminal device.

According to an eighth aspect, a communication method is provided, including: A gateway mobile location center GMLC in a first network sends a first request message to a storage function network element in a second network, where the first request message includes an identifier of a terminal device, and the first request message is used to request to obtain data of the terminal device; a first network element sends a third request message to the storage function network element in the second network, where the third request message includes the identifier of the terminal device, and the third request message is used to request to obtain subscription data of the terminal device; the storage function network element sends the subscription data of the terminal device to the first network element; the first network element sends a fourth request message to the storage function network element, where the fourth request message includes an identifier of the second network, and the fourth request message is used to request to obtain information about an application scope of the first network; the storage function network element sends the information about the application scope of the first network to the first network element; and the first network element determines, based on an application scope of the data of the terminal device and the application scope of the first network, information included in a first response message sent to the GMLC, where the subscription data of the terminal device includes information about the application scope of the data of the terminal device, the application scope of the first network is determined based on first configuration information, and the first configuration information includes information about an application scope of at least one network.

With reference to the eighth aspect, in some implementations of the eighth aspect, the method further includes: The storage function network element determines, based on the first configuration information and an identifier of the first network, the application scope of the first network.

With reference to the eighth aspect, in some implementations of the eighth aspect, the data of the terminal device includes first data and second data, an application scope of the first data is a first scope, an application scope of the second data is a second scope, and that the first network element determines, based on the application scope of the data of the terminal device and the application scope of the first network, the information included in the first response message sent to the GMLC includes: If an intersection set exists between the application scope of the first network and the first scope, the first network element determines that the first response message includes the first data; if an intersection set exists between the application scope of the first network and the second scope, the first network element determines that the first response message includes the second data; if an intersection set exists between the application scope of the first network and each of the first scope and the second scope, the first network element determines that the first response message includes the first data and the second data; or if no intersection set exists between the application scope of the first network and the application scope of the data of the terminal device, the first network element determines that the first response message includes information about rejecting providing the data of the terminal device.

According to a ninth aspect, a communication method is provided, including: A gateway mobile location center GMLC in a first network sends a first request message to a storage function network element in a second network, where the first request message includes an identifier of a terminal device, and the first request message is used to request to obtain data of the terminal device; a first network element sends a fifth request message to the storage function network element in the second network, where the fifth request message includes an identifier of the second network, the fifth request message is used to request to obtain an identifier of a mobility management network element corresponding to the first network; the storage function network element sends the identifier of the mobility management network element corresponding to the first network to the first network element; and the first network element determines, based on a mobility management network element serving the terminal device and the mobility management network element corresponding to the first network, whether to allow sending the data of the terminal device to the first network.

With reference to the ninth aspect, in some implementations of the ninth aspect, that the first network element determines, based on a relationship between the mobility management network element corresponding to the first network and the mobility management network element serving the terminal device, whether to allow sending the data of the terminal device to the first network includes: If the mobility management network element serving the terminal device is a subset of the mobility management network element corresponding to the first network, the first network element determines to allow sending the data of the terminal device to the first network; or if the mobility management network element serving the terminal device is not a subset of the mobility management network element corresponding to the first network, the first network element determines not to allow sending the data of the terminal device to the first network.

With reference to the ninth aspect, in some implementations of the ninth aspect, when the first network element determines to allow sending the data of the terminal device to the first network, the method further includes: The first network element sends a first response message in response to the first request message to the GMLC, where the first response message includes the data of the terminal device.

With reference to the ninth aspect, in some implementations of the ninth aspect, when the first network element determines not to allow sending the data of the terminal device to the first network, the method further includes: The first network element sends a first response message in response to the first request message to the GMLC, where the first response message is used to reject providing the data of the terminal device.

With reference to the ninth aspect, in some implementations of the ninth aspect, when the first network element determines not to allow sending the data of the terminal device to the first network, the method further includes: The first network element sends a first response message in response to the first request message to the GMLC, where the first response message includes a generic public subscription identifier GPSI or a pseudonym of the terminal device.

According to a tenth aspect, a communication apparatus is provided. The apparatus is configured to perform the method provided in the second aspect or the fourth aspect. Specifically, the communication apparatus may include units and/or modules configured to perform the method according to any one of the implementations of the second aspect or the fourth aspect, for example, a processing unit and an obtaining unit.

In an implementation, a transceiver unit may be a transceiver or an input/output interface, and the processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to an eleventh aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to a transceiver, so that the transceiver performs transmission of the information. After the information is output by the processor, other processing may further need to be performed on the information before the information arrives at the transceiver. Similarly, when the processor receives the input information, the transceiver obtains/receives the information, and inputs the information into the processor. Further, after the transceiver receives the information, other processing may need to be performed on the information before the information is input into the processor.

Based on the foregoing principle, for example, receiving the request message in the foregoing methods may be understood as receiving the input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a twelfth aspect, a computer-readable storage medium is provided. The computer-readable storage medium stores program code to be executed by a device, and the program code is used to perform any method provided in the second aspect or the fourth aspect.

According to a thirteenth aspect, a computer program product including instructions is provided. When the computer program product runs on a computer, the computer is enabled to perform any method provided in the second aspect or the fourth aspect.

According to a fourteenth aspect, a chip is provided. The chip includes a processor and a communication interface. The processor reads, through the communication interface, instructions stored in a memory, to perform any method provided in the second aspect or the fourth aspect.

Optionally, in an implementation, the chip may further include the memory. The memory stores the instructions, and the processor is configured to execute the instructions stored in the memory. When the instructions are executed, the processor is configured to perform any method provided in the second aspect or the fourth aspect.

According to a fifteenth aspect, a communication system is provided, including a gateway mobile location center GMLC in a first network and a storage function network element in a second network, where the storage function network element performs any method provided in the second aspect or the fourth aspect.

Specifically, the GMLC is configured to send a first request message to the storage function network element, where the first request message includes an identifier of a terminal device, and the first request message is used to request to obtain data of the terminal device; the storage function network element is configured to determine, in response to the first request message, whether the first network is a network that is allowed to obtain the data of the terminal device; and the storage function network element is further configured to determine, based on a determining result, whether to send the data of the terminal device to the GMLC.

With reference to the fifteenth aspect, in some implementations of the fifteenth aspect, before the storage function network element determines whether the first network is a network that is allowed to obtain the data of the terminal device, the storage function network element is further configured to determine that the GMLC and the storage function network element belong to different network domains.

With reference to the fifteenth aspect, in some implementations of the fifteenth aspect, that the storage function network element determines that the GMLC and the storage function network element belong to different network domains includes any one of the following: The storage function network element determines, based on an identifier of the first network included in the first request message, that the GMLC and the storage function network element belong to different network domains; the storage function network element determines an identifier of the first network based on an internet protocol IP address of the GMLC, and determines, based on the identifier of the first network, that the GMLC and the storage function network element belong to different network domains; or the storage function network element determines an identifier of the first network based on a certificate of the GMLC, and determines, based on the identifier of the first network, that the GMLC and the storage function network element belong to different network domains.

With reference to the fifteenth aspect, in some implementations of the fifteenth aspect, that the storage function network element determines whether the first network is a network that is allowed to obtain the data of the terminal device includes: The storage function network element determines, based on local configuration information, whether the first network is a network that is allowed to obtain the data of the terminal device, where the configuration information includes a list of identifiers of networks that are allowed to obtain the data of the terminal device.

With reference to the fifteenth aspect, in some implementations of the fifteenth aspect, that the storage function network element determines, based on the local configuration information, whether the first network is a network that is allowed to obtain the data of the terminal device includes: If the identifier of the first network belongs to the list of identifiers of networks that are allowed to obtain the data of the terminal device, the storage function network element determines that the first network is a network that is allowed to obtain the data of the terminal device; or if the identifier of the first network does not belong to the list of identifiers of networks that are allowed to obtain the data of the terminal device, the storage function network element determines that the first network is a network that is not allowed to obtain the data of the terminal device.

With reference to the fifteenth aspect, in some implementations of the fifteenth aspect, that the storage function network element determines whether the first network is a network that is allowed to obtain the data of the terminal device includes: The storage function network element determines, based on a correspondence between a mobility management network element serving the terminal device and a mobility management network element corresponding to the first network, whether the first network is a network that is allowed to obtain the data of the terminal device.

With reference to the fifteenth aspect, in some implementations of the fifteenth aspect, that the storage function network element determines, based on the correspondence between a mobility management network element serving the terminal device and a mobility management network element corresponding to the first network, whether the first network is a network that is allowed to obtain the data of the terminal device includes: If the mobility management network element serving the terminal device is a subset of the mobility management network element corresponding to the first network, the storage function network element determines that the first network is a network that is allowed to obtain the data of the terminal device; or if the mobility management network element serving the terminal device is not a subset of the mobility management network element corresponding to the first network, the storage function network element determines that the first network is a network that is not allowed to obtain the data of the terminal device.

With reference to the fifteenth aspect, in some implementations of the fifteenth aspect, that the storage function network element determines, based on the determining result, whether to send the data of the terminal device to the GMLC includes: When the determining result is that the first network is a network that is not allowed to obtain the data of the terminal device, the storage function network element rejects sending the data of the terminal device to the GMLC.

With reference to the fifteenth aspect, in some implementations of the fifteenth aspect, that the storage function network element determines, based on the determining result, whether to send the data of the terminal device to the GMLC includes: When the determining result is that the first network is a network that is not allowed to obtain the data of the terminal device, the storage function network element is used to send a generic public subscription identifier GPSI or a pseudonym of the terminal device to the GMLC.

With reference to the fifteenth aspect, in some implementations of the fifteenth aspect, that the storage function network element determines, based on the determining result, whether to send the data of the terminal device to the GMLC includes: When the determining result is that the first network is a network that is allowed to obtain the data of the terminal device, the storage function network element is used to send the data of the terminal device to the GMLC.

With reference to the fifteenth aspect, in some implementations of the fifteenth aspect, the data of the terminal device includes at least one of the following: a subscription permanent identifier SUPI of the terminal device, a privacy setting of the terminal device, or an address of the mobility management network element serving the terminal device.

With reference to the fifteenth aspect, in some implementations of the fifteenth aspect, the second network is a public network, and the first network is a local network.

With reference to the fifteenth aspect, in some implementations of the fifteenth aspect, the communication system further includes a mobile location service client, where the mobile location service client is configured to send a location service request to the GMLC, and the location service request includes the identifier of the terminal device.

### BRIEF DESCRIPTION OF DRAWINGS

FIG. 1 is a diagram of an architecture of a communication system applicable to an embodiment of this application;
FIG. 2 is a diagram of a location service architecture in a PNINPN scenario according to an embodiment of this application;
FIG. 3 is a schematic flowchart of a location method;
FIG. 4 is a schematic flowchart of a communication method according to this application;
FIG. 5 is a schematic flowchart of another communication method according to this application;
FIG. 6 is a block diagram of a communication apparatus according to an embodiment of this application;
FIG. 7 is a block diagram of a communication apparatus according to another embodiment of this application, and
FIG. 8 is a block diagram of a communication apparatus according to still another embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system.

In a communication system, a network operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network that meets a requirement of a 3GPP standard, and is referred to as a 3GPP network for short. The 3GPP network usually includes but is not limited to a 5G network, a 4th-generation (4th-generation, 4G) mobile communication network, and another future communication system, for example, a 6th-generation (6th-generation, 6G) network.

For ease of description, the PLMN or the 5G network is used as an example for description in embodiments of this application.

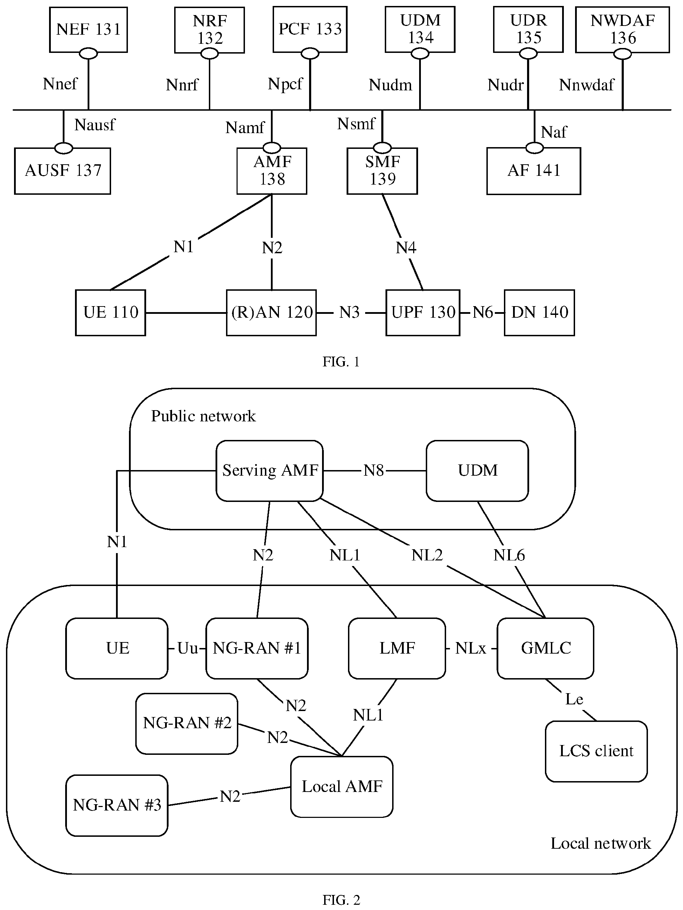

FIG. 1 is a diagram of a network architecture 100 according to this application. A 5G network architecture based on a service-based architecture SBA in a non-roaming scenario defined in a 3GPP standardization process is used as an example. As shown in the figure, the network architecture may include three parts: a terminal device part, a data network (data network, DN) part, and an operator network PLMN part. The following briefly describes a function of a network element of each part.

The terminal device part may include a terminal device 110, and the terminal device 110 may also be referred to as user equipment (user equipment, UE). The terminal device 110 in this application is a device having wireless sending and receiving functions, and may communicate with one or more core network (core network, CN) devices via an access network device (which may also be referred to as an access device) in a radio access network (radio access network, RAN) 120. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on land, including an indoor or outdoor device, or a handheld or vehicle-mounted device; may be deployed on a water surface (for example, a ship); or may be deployed in the air (for example, on an airplane, a balloon, or a satellite). The terminal device 110 may be a cellular phone (cellular phone), a cordless telephone set, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device 110 may be a handheld device having a wireless communication function, a computing device, another device connected to a wireless modem, a vehicle-mounted device, a wearable device, an uncrewed aerial vehicle device, a terminal in an internet of things or an internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device herein is a 3GPP terminal. A type, a category, or the like of the terminal device is not limited in embodiments of this application. For ease of description, in this application, an example in which UE represents a terminal device is used for description below.

The operator network PLMN part may include but is not limited to a (radio) access network ((radio) access network, (R)AN) 120 and a core network (core network, CN) part.

The (R)AN 120 may be considered as a sub-network of an operator network, and is an implementation system between a service node in the operator network and the terminal device 110. To access the operator network, the terminal device 110 first passes through the (R)AN 120, and then may be connected to the service node in the operator network through the (R)AN 120. An access network device (RAN device) in embodiments of this application is a device that provides a wireless communication function for the terminal device 110, and may also be referred to as a network device. The RAN device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission point (transmitting and receiving point, TRP), a transmitting point (transmitting point, TP), a small cell base station device (pico), a mobile switching center, a network device in a future network, or the like. In systems using different radio access technologies, devices with functions of the access network device may have different names. For ease of description, in all embodiments of this application, the foregoing apparatuses that provide a wireless communication function for the terminal device 110 are collectively referred to as an access network device, or referred to as a RAN or an AN for short. It should be understood that a specific type of the access network device is not limited in this specification.

The CN part may include but is not limited to the following NFs: a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an authentication server function (authentication server function, AUSF) 137, an access and mobility management function (access and mobility management function, AMF) 138, and a session management function (session management function, SMF) 139.

The data network DN 140 may also be referred to as a packet data network (packet data network, PDN), and is usually a network located outside the operator network, for example, a third-party network. Certainly, in some implementations, the DN may alternatively be deployed by an operator, that is, the DN is a part of the PLMN. Whether the DN belongs to the PLMN is not limited in this application. The operator network PLMN may access a plurality of data networks DNs 140. A plurality of services may be deployed on the data network DN 140, and the data network DN 140 may provide a data service, a voice service, and/or the like for the terminal device 110. For example, the data network DN 140 may be a private network of a smart factory, a sensor installed in a workshop of the smart factory may be the terminal device 110, a control server of the sensor is deployed on the data network DN 140, and the control server may provide a service for the sensor. The sensor may communicate with the control server, to obtain instructions of the control server, transmit collected sensor data to the control server based on the instructions, and so on. For another example, the data network DN 140 may be an internal office network of a company, a mobile phone or a computer of an employee of the company may be the terminal device 110, and the mobile phone or the computer of the employee may access information, data resources, and the like in the internal office network of the company. The terminal device 110 may establish a connection to the operator network through an interface (for example, N1) provided by the operator network, and use the data service, the voice service, and/or the like provided by the operator network. The terminal device 110 may further access the data network DN 140 through the operator network, and use an operator service deployed on the data network DN 140 and/or a service provided by a third party.

The following further briefly describes NF functions included in the CN.
1. The UPF 130 is a gateway provided by the operator, and is a gateway for communication between the operator network and the data network DN 140. The UPF network function 130 includes user plane-related functions such as data packet routing and transmission, data packet detection, traffic usage reporting, quality of service (quality of service, QoS) handling, lawful listening, uplink data packet detection, and downlink data packet storage.
2. The NEF 131 is a control plane function provided by the operator, and is mainly used to enable a third party to use a service provided by the network, support the network in opening a capability, an event, and data analysis of the network, convert security configuration information from an external application to the PLMN and exchange information inside and outside the PLMN, provide an API interface opened by the operator network to the outside, provide interaction between an external server and an internal operator network, and so on.
3. The NRF 132 is a control plane function provided by the operator, and may be configured to maintain real-time information of a network function and a service in the network. For example, the NRF 132 supports network service discovery, maintains services supported by NF configuration data (an NF profile) of NF instances, supports service discovery of a service communication proxy (service communication proxy, SCP), maintains SCP configuration data (an SCP profile) of SCP instances, sends notifications about newly registered, deregistered, and updated NFs and SCPs, maintains health statuses of NFs and SCPs, and so on.
4. The PCF 133 is a control plane function provided by the operator, and supports a unified policy framework to govern network behavior and provide subscription information related to a policy rule and policy decision for another control function, and so on.
5. The UDM 134 is a control plane function provided by the operator, and is responsible for storage of a subscription permanent identifier (subscription permanent identifier, SUPI) of a subscriber in the operator network, a generic public subscription identifier (generic public subscription identifier, GPSI) of the subscriber, a credential (credential), and other information. The SUPI is first encrypted in a transmission process, and the encrypted SUPI is referred to as a subscription concealed identifier (subscription concealed identifier, SUCI). The information stored in the UDM network function 134 may be used for authentication and authorization for accessing the operator network by the terminal device 110. The subscriber of the operator network may be specifically a user using a service provided by the operator network, for example, a user using a subscriber identity module (subscriber identity module, SIM) card of China Telecom, or a user using a SIM card of China Mobile. The credential of the subscriber may be a longterm key stored in the SIM card, or a stored small file, for example, information related to encryption of the SIM card, and is used for authentication and/or authorization. It should be noted that the permanent identifier, the credential, a security context, authentication data (cookie), and a token are equivalent to information related to verification/authentication and authorization, and are not limited or distinguished between each other for ease of description in embodiments of this application.
6. The UDR 135 is a control plane function provided by the operator, provides a function of storing and obtaining subscription data for the UDM, provides a function of storing and obtaining policy data for the PCF, stores and obtains NF group ID (group ID) information of a user, and so on.
7. The NWDAF 136 is a control plane function provided by the operator. A main function of the NWDAF 136 is to collect data from an NF, an external application function AF, an operations, administration, and maintenance (operations, administration, and maintenance, OAM) system, and the like, and provide the NF and the AF with NWDAF service registration, data exposure, data analysis, and the like.
8. The AUSF 137 is a control plane function provided by the operator, and is usually used for primary authentication, namely, authentication between the terminal device 110 (subscriber) and the operator network. After receiving an authentication request initiated by the subscriber, the AUSF network function 137 may perform authentication and/or authorization on the subscriber by using authentication information and/or authorization information stored in the UDM network function 134, or generate authentication information and/or authorization information of the subscriber through the UDM network function 134. The AUSF network function 137 may feed back the authentication information and/or the authorization information to the subscriber.
9. The AMF 138 is a control plane network function provided by the operator network, and is responsible for access control and mobility management for accessing the operator network by the terminal device 110, for example, including functions such as mobility status management, allocation of a temporary user identity, and user authentication and authorization.
   The AMF 138 is configured to perform a non-access stratum (Non-Access Stratum, NAS) connection to the UE, and has a same 5G NAS security context as the UE. The 5G NAS security context includes KAMF, a NAS hierarchy key, key identification information same as that of the NAS hierarchy key, a UE security capability, and uplink and downlink NAS COUNT values. The NAS hierarchy key includes a NAS encryption key and a NAS integrity protection key that are respectively used for confidentiality protection of a NAS message and integrity protection of the NAS message.
10. The SMF 139 is a control plane network function provided by the operator network, and is responsible for managing a PDU session of the terminal device 110. The PDU session is a channel for transmission of a PDU, and the terminal device and the data network DN 140 need to transmit PDUs to each other through the PDU session. The SMF network function 139 is responsible for establishment, maintenance, deletion, and the like of the PDU session. The SMF network function 139 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming.
11. The AF 141 is a control plane network function provided by the operator network, and is configured to provide application layer information. The AF 141 may interact with a policy framework through the network exposure function network element, or directly interact with the policy framework to make a policy decision request, or the like. The AF 141 may be located inside or outside the operator network.

It may be understood that the foregoing network elements or functions may be physical entities in a hardware device, software instances running on dedicated hardware, or virtualized functions instantiated on a sharing platform (for example, a cloud platform). In short, an NF may be implemented by hardware or software.

In FIG. 1, Nnef, Nnrf, Npcf, Nudm, Nudr, Nnwdaf, Nausf, Namf, Nsmf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that a name of an interface between the network functions in the figure is merely an example. During specific implementation, the name of the interface in the system architecture may alternatively be another name. This is not limited in this application. In addition, a name of a message (or signaling) whose transmission is performed between the foregoing network elements is merely an example, and does not constitute any limitation on a function of the message.

For ease of description, in embodiments of this application, network functions (for example, the NEF 131, ..., and the SMF 139) are collectively/briefly referred to as NFs. In other words, an NF described below in embodiments of this application may be replaced with any network function. In addition, FIG. 1 describes only some network functions as an example, and the NF described below is not limited to the network functions shown in FIG. 1 .

It should be understood that the foregoing network architecture applied to embodiments of this application is merely a network architecture described from a perspective of a service-based architecture, and a network architecture applicable to embodiments of this application is not limited thereto. Any network architecture that can implement functions of the foregoing network elements is applicable to embodiments of this application.

It should be further understood that the AMF, the SMF, the UPF, the NEF, the AUSF, the NRF, the PCF, and the UDM shown in the figure may be understood as network elements configured to implement different functions in the core network, for example, may be combined as required to form a network slice. These core network elements may be independent devices, or may be integrated into a same device to implement different functions. A specific form of the foregoing network elements is not limited in this application.

It should be further understood that the foregoing names are defined merely for ease of distinguishing between different functions, and should not constitute any limitation on this application. This application does not exclude a possibility that another name is used in the 5G network and another future network. For example, in the 6G network, some or all of the foregoing network elements may still use terms in 5G, or may use other names.

Specifically, this application mainly relates to a non-public network location service (location service in PNINPN) (which may also be referred to as local location) in a 5G system architecture, which is referred to as a PNINPN service for short below. For ease of understanding, the following briefly describes a location service architecture in a PNINPN scenario with reference to FIG. 2. FIG. 2 is a diagram of a location service architecture in a PNINPN scenario according to an embodiment of this application. It should be understood that a 5G system described in this specification is merely an example, and should not constitute any limitation on this application. Two networks described in this specification are a public network and a local network, are merely examples, and should not constitute any limitation on this application. For example, the two networks are alternatively a first public network and a second public network.

As shown in FIG. 2, the location service architecture in the PNINPN scenario may include but is not limited to the following parts:

UE, radio access networks (radio access networks, RANs) (for example, NG-RAN #1, NG-RAN #2, and NG-RAN #3 shown in FIG. 2), and core network elements. The user equipment includes a located device, the access networks may be configured to implement a function related to radio access, and the core network elements may include but are not limited to the following network elements: a service access and mobility management function (serving access and mobility management function, serving AMF) network element, a local access and mobility management function (local access and mobility management function, local AMF) network element, a location management function (location management function, LMF) network element, a gateway mobile location center (Gateway Mobile Location Center, GMLC), a unified data management (unified data management, UDM), and a mobile location service client (Location service, LCS client).

It should be noted that the network elements shown in FIG. 2 belong to two different networks (for example, a public network and a local network shown in FIG. 2). Specifically, the serving AMF and the UDM are network elements in the public network, and the UE, the RANs (NG-RAN #1, NG-RAN #2, and NG-RAN #3 shown in FIG. 2), the local AMF, the LMF, the GMLC, and the LCS client belong to the local network.

It should be understood that the public network and the local network may further include network elements in addition to the foregoing network elements. For example, the public network may further include a NEF, a UDR, an NWDAF, an AUSF, or the like, and the local network may further include an AMF, an SMF, or the like. Details are not described herein again.

It should be further understood that the local network is a type of non-public network, and may also be referred to as a campus network, a non-public network, or the like.

The following briefly describes the network elements shown in FIG. 2.
1. For the UE, refer to the descriptions of the terminal device in FIG. 1. Details are not described herein again. The UE may be a to-be-located (or to-be-ranged) terminal device.
2. For the RAN device, refer to the descriptions of the (R)AN 120 in FIG. 1. Details are not described herein again.
3. The access and mobility management functions include the serving AMF and the local AMF shown in FIG. 2. Refer to the descriptions of the AMF 138 in FIG. 1.
   In a location service, the AMF is configured to receive a location service request, select a gateway mobile location center network element, and so on. In the PNINPN scenario, the local AMF is additionally deployed, and is configured to transmit, to the location management network element, a location-related message sent by a base station.
4. The LMF is configured to receive a location request, determine a location method based on capabilities of the UE and the network, a quality of service (Quality of Service, QoS) requirement, and a client type, exchange location-related information with the UE, the base station, and the like, and calculate and perform verification on a location result. In the PNINPN scenario, the LMF is deployed on the local network, and the location-related information is not open to the public network.
5. The GMLC is a 1^{st} network element through which an external location application accesses a core network, and requests routing information and privacy setting information of the UE from the UDM. In the PNINPN scenario, the GMLC is deployed on the local network.
6. The LCS client is a third-party client (external client) that requests to obtain a user location. The external client may alternatively be replaced with an AF. The AF accesses the GMLC through a NEF interface. In the PNINPN scenario, the location service client is a location service client in the local network.

It may be understood that the foregoing network elements or functions may be network elements in a hardware device, may be software functions running on dedicated hardware, or may be virtualized functions instantiated on a platform (for example, a cloud platform).

It should be noted that names of the network elements and names of communication interfaces between the network elements in FIG. 2 are briefly described by using an example specified in a current protocol. However, embodiments of this application are not limited to being applicable only to a currently known communication system. Therefore, standard names used when the current protocol is used as an example for description are all function descriptions. A specific name of a network element, an interface, signaling, or the like is not limited in this application, and only represents a function of the network element, the interface, or the signaling, and may be correspondingly extended to another system, for example, a future communication system.

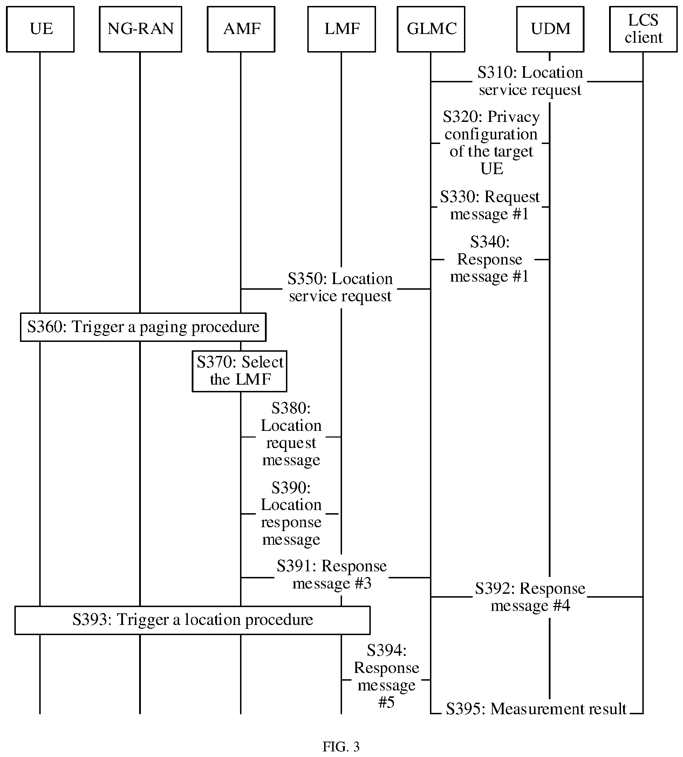

For ease of understanding the technical solutions in embodiments of this application, the following briefly describes, with reference to FIG. 3, a location method for a location service based on a non-public network based on FIG. 2.

FIG. 3 is a schematic flowchart of a location method. The method includes the following steps.

S310: A location client (or an application function network element) initiates a location service request to a GMLC.

Specifically, the location service request (an LCS service request) carries identification information of target UE. The identification information of the target UE may be a generic public subscription identifier (Generic Public Subscription Identifier, GPSI) or a subscription permanent identifier (Subscription Permanent Identifier, SUPI).

For example, the location client or the application function network element may directly send the location service request to the GMLC, or may send the location request message to the GMLC through a NEF.

S320: The GMLC requests a privacy setting of the target UE from a UDM, and the UDM returns the privacy setting of the target UE to the GMLC.

For example, the privacy setting includes:
(1) location is not allowed;
(2) location is allowed and does not need to be notified to a user;
(3) location is allowed and needs to be notified to the user;
(4) location needs to be notified to the user and confirmed by the user, and location is allowed with user authorization or when there is no response; or
(5) location needs to be notified to the user and confirmed by the user, and location is allowed with user authorization.

The privacy setting may further include valid time and a valid geographical range of the privacy setting.

S330: The GMLC sends request message #1 to the UDM.

Request message #1 carries the identification information of the target UE, and is used to request to obtain a context management service of the UE. Specifically, request message #1 is a Nudm_UEcontextmanagement_Get request message.

S340: The UDM sends response message #1 to the GMLC.

Response message #1 carries a network address of a serving AMF of the target UE. When the identification information of the target UE in step S330 is the GPSI, response message #1 further includes the SUPI of the target UE.

S350: The GMLC sends the location service request to the serving AMF.

Specifically, the GMLC sends the location service request to the serving AMF based on the network address of the serving AMF. The location service request carries location attribute information such as the identification information (SUPI) of the target UE and a client type.

Based on the privacy setting of the target UE, the location service request may further include indication information #1.

For example, indication information #1 may indicate any one of the following:
(1) location is allowed and does not need to be notified to a user;
(2) location is allowed and needs to be notified to the user;
(3) location needs to be notified to the user and confirmed by the user, and location is allowed when there is no response; or
(4) location needs to be notified to the user and confirmed by the user, and location is not allowed when there is no response.

S360: The AMF triggers a paging procedure.

Optionally, when the target UE is in idle mode, the AMF initiates a network-triggered service request procedure, that is, the AMF triggers the paging procedure, to establish a connection between the network and the UE.

For example, when the paging succeeds, the AMF determines, based on indication information #1, whether to notify the user and whether user confirmation is needed. When only the notification is needed, the AMF sends a NAS message to the target UE, where the message carries the identification information of the location client. When the notification to the user is needed and the user confirmation is needed, the message further needs to carry indication information #2 indicating that the user confirmation is needed.

The AMF receives response message #2 of the target UE, where response message #2 carries a location privacy indication, and the location privacy indication may be:
(1) location is allowed; or
(2) location is not allowed.

Optionally, response message #2 carries applicable time of the location privacy indication, for example, start time and end time.

S370: The AMF selects an LMF.

In a PNINPN scenario, the AMF selects the LMF in a local network based on configuration information.

S380: The AMF sends a location request message to the LMF.

The location request message (an Nlmf_Location_DetermimeLocation request) carries the identification information of the target UE, where an identifier is a location-related identifier.

S390: The LMF sends a location response message to the AMF.

Specifically, after receiving the location request message sent by the AMF, the LMF may optionally trigger a location procedure. The LMF sends a location response message (an LCS response) to the AMF based on configuration information.

S391: The LMF sends response message #3 (an LCS service response) to the GMLC.

S392: The GMLC sends response message #4 (an LCS service response) to the location client or the application function network element.

S393: The LMF triggers a location procedure.

In the PNINPN scenario, the location procedure is a network-assisted location method. The LMF selects an AMF in a public network to send a UE-related NRPPa signaling message. The LMF selects a local AMF to send a non-UE-related NRPPa signaling message. A local base station reports a location-related parameter like a measurement report to the local LMF through the local AMF, and the local LMF calculates a location of the target UE.

S394: The LMF sends response message #5 (Nlmf_Location_EventNotify) to the GMLC.

Response message #5 carries the location of the target UE.

S395: The GMLC sends a measurement result (an LCS service report) to the location client or the application function network element to provide the location of the target UE.

In addition, to facilitate understanding of embodiments of this application, the following several descriptions are provided.

First, in this application, "indicate" may include "directly indicate" and "indirectly indicate". When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application.

Second, "at least one" in this application means one or more, and "a plurality of" means two or more. In addition, in embodiments of this application, "first", "second", and various numbers (for example, "#1" and "#2") are merely used for differentiation for ease of description, and are not used to limit the scope of embodiments of this application. Sequence numbers in the following processes do not mean an execution sequence. The execution sequence of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "310" and "320" are merely identifiers for ease of description, and do not limit a sequence of performing steps.

Third, in this application, a term like "example" or "for example" is used to represent giving an example, an illustration, or a description. Any embodiment or design scheme described as an "example" or "for example" in this application should not be explained as being more preferred or having more advantages than another embodiment or design scheme. To be precise, use of the term like "example" or "for example" is intended to present a relative concept in a specific manner.

Fourth, "being stored" in embodiments of this application may indicate being stored in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

The foregoing briefly describes, with reference to FIG. 1 and FIG. 2, a scenario to which a communication method provided in embodiments of this application can be applied, and describes a location method with reference to FIG. 3.

It can be learned from the location procedure shown in FIG. 3 that after receiving the location service request, the GMLC may obtain privacy data of the terminal device from the UDM network element. The GMLC belongs to the non-public network, and the UDM belongs to the public network. The non-public network and the public network belong to different security domains (or network domains). In this location method, the non-public network may actively obtain user data in the public network through an existing interface. This may cause leakage of the user data stored in the public network.

For example, the GMLC in the local network actively sends the identification information of the UE to the UDM in the public network, and the UDM returns the privacy setting corresponding to the UE. In addition, when the identification information of the UE is the GPSI, the GMLC may further obtain the SUPI of the UE. This causes leakage of the user data stored in the public network.

For another example, the local network serves only UE 1 and UE 2, but a malicious GMLC network element may construct or obtain identification information of UE (for example, UE 3 and UE 4) other than UE 1 and UE 2, and further obtain privacy settings and/or SUPIs of the UE. This causes leakage of the user data stored in the public network.

It should be understood that if the GMLC network element in the local network is a malicious network element (for example, the GMLC network element is captured), an attack mode is independent of a registration status of the UE, and an attack is an independent procedure initiated by the network side.

To avoid leakage of the user data stored in the public network that may be caused by the foregoing location procedure, this application provides a communication method, to ensure that the user data stored in the public network is not leaked.

It should be understood that the communication method provided in embodiments of this application may be applied to a location communication system for a location service that is based on a non-public network, for example, applied to the communication architecture shown in FIG. 2, or may be applied to another location communication architecture for a location service that is based on a non-public network, or may be applied to another communication architecture in which a network element in a local network obtains data of a terminal device from a public network in a hybrid networking scenario (for example, a GMLC in a visited network actively obtains a privacy setting of a terminal device from a GMLC in a home network). An application scenario is not limited in this application, and any communication system including function network elements in the following embodiments may be used.

It should be further understood that a specific structure of an execution body of the method provided in embodiments of this application is not particularly limited in the following embodiments, provided that a program in which code of the method provided in embodiments of this application is recorded can be run to perform communication according to the method provided in embodiments of this application. For example, the execution body of the method provided in embodiments of this application may be a device, or may be a functional module that can invoke and execute the program in the device.

The following uses interaction between network elements as an example to describe in detail the communication method provided in embodiments of this application.

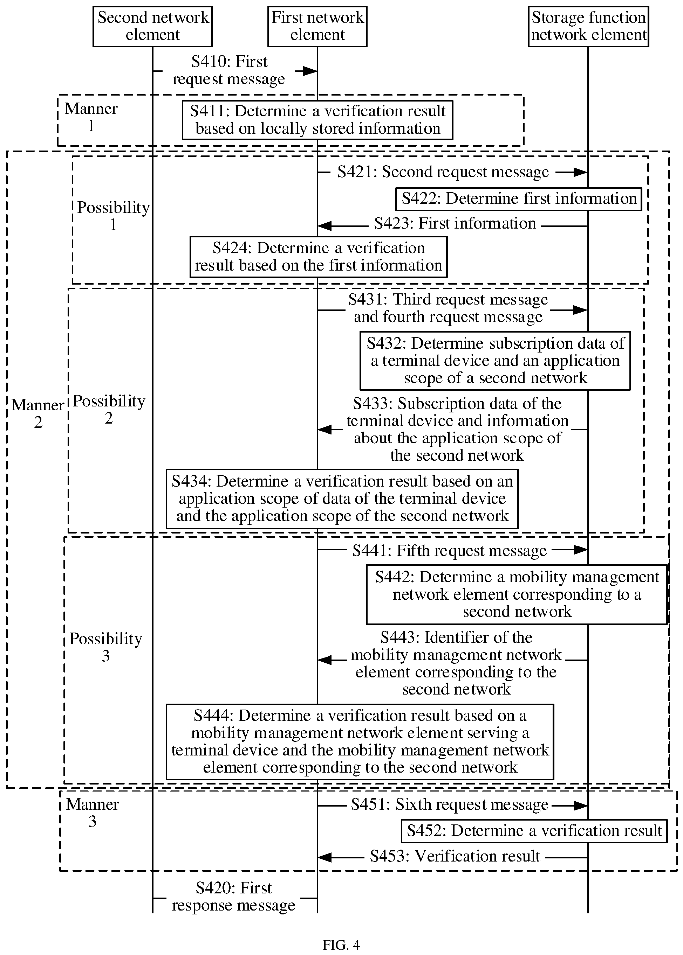

FIG. 4 is a schematic flowchart of a communication method according to this application. The method is applied to hybrid networking including a first network and a second network. For example, the second network is a public network, and the first network is a non-public network (for example, a local network, a private network, or a campus network). For another example, the first network and the second network are different public networks (for example, the first network is a home network, and the second network is a visited network).

It should be understood that the public network, the non-public network, and the like are merely examples, and do not constitute any limitation on the protection scope of this application. In this embodiment, specific forms of the second network and the first network are not limited, provided that the second network and the first network are different networks.

The communication method includes the following steps.

S410: A first network element receives a first request message from a second network element, in other words, the second network element sends the first request message to the first network element.

The first network element is a network element, for example, a UDM, a UDR, an AUSF, or an NWDAF in the second network, that has a communication interface with the second network element.

The second network element is a network element, for example, a GMLC, an AMF, or an SMF in the first network, that needs to obtain data of a terminal device.

For example, the first network element is the UDM in the second network, and the second network element is the GMLC in the first network; the first network element is the UDR in the second network, and the second network element is the GMLC in the first network; the first network element is the AUSF or the NWDAF in the second network, and the second network element is the GMLC in the first network; the first network element is the UDM in the second network, and the second network element is the AMF in the first network; or the first network element is the UDM in the second network, and the second network element is the SMF in the first network.

Specifically, the first request message includes an identifier of the terminal device, and the first request message is used to request to obtain the data of the terminal device. The identifier of the terminal device includes but is not limited to a GPSI or an SUPI of the terminal device. The data of the terminal device includes but is not limited to the SUPI of the terminal device, a privacy setting of the terminal device, an address of an AMF serving the terminal device, or the like.

In this embodiment, after receiving the first request message, the first network element does not directly provide the data of the terminal device for the second network element, but determines, based on a verification result, whether to send a part or all of the data of the terminal device to the second network element. The verification result indicates whether the first network is a network that is allowed to obtain the data of the terminal device.

For example, there are the following manners 1 to 3 of determining the verification result in this embodiment.

Manner 1: The first network element is a storage function network element in the second network, and locally stores subscription data of the terminal device and/or other configuration information (for example, first configuration information, second configuration information, and the like described below) needed for determining the verification result. The storage function network element is a network element that is in the second network and that provides functions of storing and obtaining the subscription data, and includes but is not limited to the UDM, the UDR, or the like in the second network.

In this implementation, the first network element may determine, based on locally stored information, the verification result indicating whether the first network is a network that is allowed to obtain the data of the terminal device. The method procedure shown in FIG. 4 further includes the following step:

S411: The first network element determines the verification result based on the locally stored information.

For example, that the first network element determines the verification result based on the locally stored information in Manner 1 includes Possibilities 1 to 3 below.

Possibility 1: The locally stored information includes subscription data of at least one terminal device. The subscription data of the terminal device includes a correspondence (for ease of description, referred to as a first correspondence for short below) between the identifier of the terminal device and an identifier of at least one network. The at least one network is a network that is allowed (or not allowed) to obtain data of the terminal device, or the at least one network may be understood as a network that is allowed (or not allowed) by the terminal device to process data of the terminal device, or the at least one network may be understood as a network that the terminal device may access (or may not access).

The identifier of the terminal device is a UE ID. The identifier of the network may be at a network granularity, for example, may be a network identifier or a network name; or the identifier of the network may be at a slice granularity, for example, a slice identifier. In this embodiment, a specific form of the identifier of the network is not limited, provided that the identifier can identify the network.

Optionally, in the case shown in Possibility 1, a primary key of the subscription data of the terminal device may be the UE ID. For example, a list of identifiers of networks allowed by the UE is stored, so that the identifier of the allowed network can be obtained based on an index of the UE ID.

Optionally, in the case shown in Possibility 1, a primary key of a list of identifiers of terminal devices that allow the network to obtain data may be the identifier of the network. For example, a list of IDs of UEs served by each network is stored, so that UE that allows the network to obtain data may be obtained based on an index of an identifier of the network.

As described above, in the case shown in Possibility 1, in addition to conventional data (for example, privacy information and the SUPI) of the terminal device, the subscription data of the terminal device that is stored in the first network element further includes the first correspondence, where the first correspondence indicates the network that can obtain the data of the terminal device. Therefore, after receiving the request message for obtaining the data of the terminal device, the first network element determines, based on the network to which the network element requesting to obtain the data belongs and the first correspondence, whether to provide the data of the terminal device.

In the case shown in Possibility 1, that the first network element determines the verification result based on the locally stored information includes:
The first network element determines the verification result based on first information, where the first information includes the subscription data of the terminal device and/or a list of identifiers of terminal devices that allow the first network to obtain data.

Optionally, when the first information is the subscription data of the terminal device, and the subscription data of the terminal device includes the first correspondence, that the first network element determines the verification result based on the first correspondence includes:
When the identifier of the at least one network in the first correspondence is an identifier of a network that is allowed to obtain the data of the terminal device, if an identifier of the first network is one of the identifier of the at least one network, the first network element determines that the first network is a network that is allowed to obtain the data of the terminal device; or if an identifier of the first network is not one of the identifier of the at least one network, the first network element determines that the first network is a network that is not allowed to obtain the data of the terminal device. For example, if the identifier of the first network is network #1, and the subscription data of the terminal device that is locally stored in the first network element includes the first correspondence between the UE ID and network #1 and network #2, the first network element determines that the first network is a network that is allowed to obtain the data of the terminal device.

When the identifier of the at least one network in the first correspondence is an identifier of a network that is not allowed to obtain the data of the terminal device, if an identifier of the first network is one of the identifier of the at least one network, the first network element determines that the first network is a network that is not allowed to obtain the data of the terminal device, or if an identifier of the first network is not one of the identifier of the at least one network, the first network element determines that the first network is a network that is allowed to obtain the data of the terminal device. For example, if the identifier of the first network is network #1, and the subscription data of the terminal device that is locally stored in the first network element includes the first correspondence between the UE ID and network #1 and network #2, the first network element determines that the first network is a network that is not allowed to obtain the data of the terminal device.

It should be understood that, in this embodiment, the identifier of the first network may be determined in the following manners.
(1) The first request message carries the identifier of the first network to which the second network element belongs, and the first network element may determine, based on the first request message, information about the network to which the second network element belongs.
   For example, the first request message carries a network identifier or a network name of the first network.
(2) The first network element determines an IP address of the second network element, and determines, based on the IP address of the second network element, information about the network to which the second network element belongs.
(3) The first network element determines, based on certificate information of the second network element, information about the network to which the second network element belongs.
   For example, a certificate of the second network element carries a network identifier. In a process of establishing a secure connection between the second network element and the first network element, a second NF obtains the certificate of the second network element, stores the related network identifier, and determines, based on the network identifier in the certificate, the information about the network to which the second network element belongs.
(4) The first network element determines, based on information sent by another network element (for example, a gateway), information about the network to which the second network element belongs.

For example, the second network element is connected to the first network element through another network, and the another network element has a capability of sensing the information about the network to which the second network element belongs, and reports, to the first network element, the information about the network to which the second network element belongs.

It should be understood that (1) to (4) are merely examples for describing how the first network element obtains the information about the network to which the second network element belongs, and do not constitute any limitation on the protection scope of this application. In this embodiment, the first network element may alternatively obtain the information about the network to which the second network element belongs in another manner. For example, the first network element infers, based on historical communication data, the information about the network to which the second network element belongs. Details are not described herein again.

It should be further understood that, in this implementation, before determining that verification needs to be performed, the first network element determines that the second network element and the first network element belong to different network domains or security domains. To be specific, if the second network element and the first network element belong to a same network domain (or security domain), the first network element may provide the data of the terminal device for the second network element in response to the first request message; or if the second network element and the first network element belong to different network domains (or security domains), the first network element needs to perform verification to determine whether to provide the data of the terminal device for the second network element.

For example, after determining the identifier of the first network, the first network element may determine, based on the identifier of the first network, that the second network element and the first network element belong to different network domains or security domains.

Optionally, when the first information is the list of identifiers of terminal devices that allow the first network to obtain data, that the first network element determines the verification result based on the first information includes:

The first network element determines, based on the first correspondence in the subscription data of the at least one terminal device, the list of identifiers of terminal devices that allow the first network to obtain data. If the identifier of the terminal device is one of the list of identifiers of terminal devices that allow the first network to obtain data, the first network element determines that the first network is a network that is allowed to obtain the data of the terminal device; or if the identifier of the terminal device is not one of the list of identifiers of terminal devices that allow the first network to obtain data, the first network element determines that the first network is a network that is not allowed to obtain the data of the terminal device.

For example, the first network element locally stores subscription data of UE #1, subscription data of UE #2, and subscription data of UE #3. The subscription data of UE #1 includes a first correspondence between a UE #1 ID and network #1 and network #2, the subscription data of UE #2 includes a first correspondence between a UE #2 ID and network #2 and network #3, and the subscription data of UE #3 includes a first correspondence between a UE #3 ID and network #1 and network #2. If the identifier of the first network is network #1, the first network element determines, based on the first correspondence in the subscription data of the at least one terminal device, that the list of identifiers of terminal devices that allow the first network to obtain data includes the UE #1 ID and the UE #3 ID. When the identifier of the terminal device is the UE #1 ID or the UE #3 ID, the first network element determines that the first network is a network that is allowed to obtain the data of the terminal device.

Possibility 2: The locally stored information includes first configuration information and subscription data of at least one terminal device, the subscription data of the terminal device includes information about an application scope of the data of the terminal device, and the first configuration information includes information about an application scope of at least one network.

The application scope of the data of the terminal device may be understood as a service scope to which the data of the terminal device is applicable, an application scope to which the data of the terminal device is applicable, or another name. This is not limited in embodiments. The application scope of the network may be understood as a service scope provided by the network. The service scope may be a network identifier like a tracking area identifier or a cell identifier, or may be an identifier of a physical service scope, for example, a longitude and a latitude.

As described above, in the case shown in Possibility 2, in addition to conventional data (for example, privacy information and the SUPI) of the terminal device, the subscription data of the terminal device that is stored in the first network element further includes information indicating the application scope of the data of the terminal device. Therefore, after receiving the request message for obtaining the data of the terminal device, the first network element determines, based on an application scope of the network to which the network element requesting to obtain the data belongs and the application scope of the data of the terminal device, whether to provide the data of the terminal device.

In the case shown in Possibility 2, that the first network element determines the verification result based on the locally stored information includes:

The first network element determines, based on the first configuration information and an identifier of the first network, an application scope of the first network, and determines the verification result based on the application scope of the data of the terminal device and the application scope of the first network.

For example, the data of the terminal device includes first data and second data, an application scope of the first data is a first scope, and an application scope of the second data is a second scope.

If an intersection set exists between the application scope of the first network and the first scope, the first network element determines that the first network is a network that is allowed to obtain the first data.

If an intersection set exists between the application scope of the first network and the second scope, the first network element determines that the first network is a network that is allowed to obtain the second data.

If an intersection set exists between the application scope of the first network and each of the first scope and the second scope, the first network element determines that the first network is a network that is allowed to obtain the first data and the second data.

If no intersection set exists between the application scope of the first network and the application scope of the data of the terminal device, the first network element determines that the first network is a network that is not allowed to obtain the data of the terminal device or that the first network is allowed to obtain data of a default terminal device.

For example, the first configuration information locally stored in the first network element indicates that an application scope of network #1 is scope #1, an application scope of network #2 is scope #2, and an application scope of network #3 is scope #3. The subscription data of the terminal device indicates that an application scope of data #1 is scope #11, and an application scope of data #2 is scope #22. An intersection set exists between scope #1 and scope #11, and an intersection set exists between scope #2 and scope #22. If the identifier of the first network is network #1, the first network is a network that is allowed to obtain data #1.

It should be noted that, in the case shown in Possibility 2, a concept of the verification result may not be introduced. The locally stored information of the first network element includes the first configuration information and the subscription data of the at least one terminal device. The subscription data of the terminal device includes the information about the application scope of the data of the terminal device. The first configuration information includes the information about the application scope of the at least one network. After receiving the first request message, the first network element may directly determine, based on the locally stored information, content of the data of the terminal device that is returned to the second network element. In this case, step S411 may be understood as determining, by the first network element, information to be sent to the second network element.

For example, the first configuration information locally stored in the first network element indicates that an application scope of network #1 is scope #1, an application scope of network #2 is scope #2, and an application scope of network #3 is scope #3. The subscription data of the terminal device indicates that an application scope of data #1 is scope #11, and an application scope of data #2 is scope #22. An intersection set exists between scope #1 and scope #11, and an intersection set exists between scope #2 and scope #22. If the identifier of the first network is network #1, the first network element determines to send data #1 to the second network element.

For another example, the first configuration information locally stored in the first network element indicates that an application scope of network #1 is scope #1, an application scope of network #2 is scope #2, and an application scope of network #3 is scope #3. The subscription data of the terminal device indicates that an application scope of data #1 is scope #11, and an application scope of data #2 is scope #22. An intersection set exists between scope #1 and scope #11, and an intersection set exists between scope #2 and scope #22. If the identifier of the first network is network #3, the first network element determines, based on preconfigured information, not to send the data of the terminal device to the second network element, or determines to send data of a default terminal device to the second network element.

Possibility 3: The locally stored information includes second configuration information, and the second configuration information includes a correspondence (for ease of description, referred to as a second correspondence for short below) between an identifier of at least one network and an identifier of at least one mobility management network element in the second network. The mobility management network element in embodiments of this application is a network element that can implement access control and mobility management control functions for the terminal device to access an operator network, for example, may be the foregoing AMF, or another network element that can implement an AMF function.

In the case shown in Possibility 3, in addition to conventional data (for example, privacy information and the SUPI) of the terminal device, the subscription data of the terminal device that is stored in the first network element further includes the second correspondence, where the second correspondence indicates the mobility management network element that can obtain the data of the terminal device. Therefore, after receiving the request message for obtaining the data of the terminal device, the first network element determines, based on the mobility management network element corresponding to the network to which the network element requesting to obtain the data belongs and the second correspondence, whether to provide the data of the terminal device.

In the case shown in Possibility 3, that the first network element determines the verification result based on the locally stored information includes:
The first network element determines, based on the second configuration information and an identifier of the first network, a mobility management network element corresponding to the first network, and determines the verification result based on a mobility management network element serving the terminal device and the mobility management network element corresponding to the first network.

If the mobility management network element serving the terminal device is a subset of the mobility management network element corresponding to the first network, the first network element determines that the first network is a network that is allowed to obtain the data of the terminal device, or if the mobility management network element serving the terminal device is not a subset of the mobility management network element corresponding to the first network, the first network element determines that the first network is a network that is not allowed to obtain the data of the terminal device.

For example, first configuration information locally stored in the first network element indicates that network #1 corresponds to AMF #1 and AMF #2 in the first network (that is, there is an interface between network #1 and each of AMF #1 and AMF #2 in the first network, and there is no interface between network #1 and an AMF in another network), network #2 corresponds to AMF #2 in the first network, and network #3 corresponds to AMF #1 in the first network. If the mobility management network element serving the terminal device is AMF #1, and the identifier of the first network is network #1, the first network element determines that the first network is a network that is allowed to obtain the data of the terminal device.

It should be noted that in the case shown in Possibility 3, a concept of the verification result may not be introduced. After receiving the first request message, the first network element may determine, based on the locally stored information, whether to allow sending the data of the terminal device to the first network. In this case, step S411 may be understood as determining, by the first network element, whether to allow sending the data of the terminal device to the first network.

For example, if the mobility management network element serving the terminal device is a subset of the mobility management network element corresponding to the first network, the first network element determines to allow sending the data of the terminal device to the first network.

For another example, if the mobility management network element serving the terminal device is not a subset of the mobility management network element corresponding to the first network, the first network element determines not to allow sending the data of the terminal device to the first network.

Manner 2: The first network element is not a storage function network element in the first network (where the first network element is a network element different from the UDM, for example, the AUSF or the NWDAF). The storage function network element locally stores information (for example, the subscription data of the terminal device, the first configuration information, and the second configuration information that are shown in Manner 1 above) needed for determining the verification result. The first network element obtains, from the storage function network element via a request message, the information needed for determining the verification result, and then determines the verification result based on the obtained information.

For example, that the first network element determines the verification result in Manner 2 includes Possibilities 1 to 3 below.

Possibility 1: In correspondence to Possibility 1 of Manner 1 above, the first network element obtains, from the storage function network element via the request message, first information needed for determining the verification result, where the first information includes the subscription data of the terminal device and/or a list of identifiers of terminal devices that allow the first network to obtain data. In the case shown in Possibility 1 of Manner 2, the method procedure shown in FIG. 4 further includes the following steps.

S421: The first network element sends a second request message to the storage function network element, in other words, the storage function network element receives the second request message from the first network element.

The second request message includes the identifier of the terminal device and/or an identifier of the first network, and the second request message is used to request to obtain the first information.

S422: The storage function network element determines the first information.

Optionally, the second request message includes the identifier of the terminal device, and the storage function network element determines the subscription data of the terminal device based on locally stored subscription data of at least one terminal device and the identifier of the terminal device.

Optionally, the second request message includes the identifier of the first network, and the storage function network element determines, based on locally stored subscription data of at least one terminal device and the identifier of the first network, a list of identifiers of terminal devices that allow the first network to obtain data.

S423: The storage function network element sends the first information to the first network element, in other words, the first network element receives the first information from the storage function network element.

S424: The first network element determines the verification result based on the first information.

Specifically, for descriptions of determining, by the first network element, the verification result in the case shown in Possibility 1 of Manner 2, refer to the foregoing descriptions of Possibility 1 of Manner 1. Details are not described herein again.

Possibility 2: In correspondence to Possibility 2 of Manner 1 above, the first network element obtains, from the storage function network element via the request message, the subscription data of the terminal device and information about an application scope of the first network that are needed for determining the verification result, where the application scope of the first network is determined by the storage function network element based on first configuration information, and the first configuration information includes information about an application scope of at least one network. In the case shown in Possibility 2 of Manner 2, the method procedure shown in FIG. 4 further includes the following steps.

S431: The first network element sends a third request message and/or a fourth request message to the storage function network element, in other words, the storage function network element receives the third request message and/or the fourth request message from the first network element.

The third request message includes the identifier of the terminal device, and the third request message is used to request to obtain the subscription data of the terminal device. The fourth request message includes an identifier of the first network, and the fourth request message is used to request to obtain the information about the application scope of the first network.

The third request message and the fourth request message may be a same request message or different request messages, and may be sent simultaneously or sequentially.

It should be understood that the application scope of the first network may be locally configured by the first network element, so that the first network element may not need to request, via the fourth request message, to obtain the information about the application scope of the first network.

S432: The storage function network element determines the subscription data of the terminal device and the application scope of the first network.

The storage function network element determines the subscription data of the terminal device based on the identifier of the terminal device included in the third request message, locally stored subscription data of at least one terminal device, and the identifier of the terminal device, in other words, determines information about an application scope of the data of the terminal device that is in the subscription data of the terminal device.

In addition, the storage function network element determines, based on the identifier of the first network included in the fourth request message, the locally stored first configuration information, and the identifier of the first network, the application scope of the first network.

S433: The storage function network element sends the subscription data of the terminal device and the information about the application scope of the first network to the first network element, in other words, the first network element receives the subscription data of the terminal device and the information about the application scope of the first network from the storage function network element.

S434: The first network element determines the verification result based on the application scope of the data of the terminal device and the application scope of the first network.

Specifically, for descriptions of determining, by the first network element, the verification result in the case shown in Possibility 2 of Manner 2, refer to the foregoing descriptions of Possibility 2 of Manner 1. Details are not described herein again.

Possibility 3: In correspondence to Possibility 3 in Manner 1 above, the first network element obtains, from the storage function network element via the request message, an identifier that is of a mobility management network element corresponding to the first network and that is needed for determining the verification result, where the mobility management network element corresponding to the first network is determined by the storage function network element based on second configuration information, and the second configuration information includes a correspondence between an identifier of at least one network and an identifier of at least one mobility management network element in the second network. In the case shown in Possibility 3 of Manner 2, the method procedure shown in FIG. 4 further includes the following steps.

S441: The first network element sends a fifth request message to the storage function network element, in other words, the storage function network element receives the fifth request message from the first network element.

The fifth request message includes an identifier of the first network, and the fifth request message is used to request to obtain the identifier of the mobility management network element corresponding to the first network.

S442: The storage function network element determines the mobility management network element corresponding to the first network.

The storage function network element determines, based on the locally stored second configuration information and the identifier of the first network, the mobility management network element corresponding to the first network.

S443: The storage function network element sends the identifier of the mobility management network element corresponding to the first network to the first network element, in other words, the first network element receives the identifier of the mobility management network element corresponding to the first network from the storage function network element.

S444: The first network element determines the verification result based on a mobility management network element serving the terminal device and the mobility management network element corresponding to the first network.

Specifically, for descriptions of determining, by the first network element, the verification result in the case shown in Possibility 3 of Manner 2, refer to the foregoing descriptions of Possibility 3 of Manner 1. Details are not described herein again.

Manner 3: The first network element is not a storage function network element in the first network, and the storage function network element locally stores information (for example, the subscription data of the terminal device, the first configuration information, and the second configuration information that are shown in Manner 1 above) needed for determining the verification result. The first network element requests, via a request message, to obtain the verification result. This may be understood as that in Manner 3, the storage function network element determines the verification result and provides the verification result for the first network element. In this case, the method procedure shown in FIG. 4 further includes the following steps.

S451: The first network element sends a sixth request message to the storage function network element, in other words, the storage function network element receives the sixth request message from the first network element.

The sixth request message includes an identifier of the first network and/or an identifier of the target terminal device, and the sixth request message is used to request to obtain the verification result.

S452: The storage function network element determines the verification result.

Specifically, for a manner in which the storage function network element determines the verification result, refer to the foregoing descriptions of Possibilities 1 to 3 of Manner 1. Details are not described herein again.

S453: The storage function network element sends the verification result to the first network element, in other words, the first network element receives the verification result from the storage function network element.

In a possible implementation, after determining the verification result in Manner 1 to Manner 3, the first network element may determine, based on the verification result, whether to provide a part or all of the data of the terminal device for the second network element.

For example, if the verification result indicates that the first network is a network that is allowed to obtain the data of the terminal device, the first network element determines, based on the verification result, to provide the data of the terminal device for the second network element.

For another example, if the verification result indicates that the first network is a network that is allowed to obtain first data in the data of the terminal device, the first network element determines, based on the verification result, to provide the first data for the second network element.

In another possible implementation, in Manner 3, the storage function network element sends, to the first network element, an indication indicating whether to provide a part or all of the data of the terminal device for the second network element. In other words, in this implementation, after determining the verification result in Manner 3, the storage function network element may further determine, based on the verification result, whether to provide a part or all of the data of the terminal device for the second network element, and notify the first network element via indication information, so that the first network element sends a response to the second network element based on the indication.

The method procedure shown in FIG. 4 further includes the following step:
S420: The first network element sends a first response message to the second network element, in other words, the second network element receives the first response message from the first network element.

Specifically, information carried in the first response message is determined based on the verification result.

In a possible implementation, when the first network is a network that is allowed to obtain the data of the terminal device, the first response message includes a part or all of the data of the terminal device.

For example, if the verification result indicates that the first network is a network that is allowed to obtain first data in the data of the terminal device, the first response message includes the first data.

In another possible implementation, when the first network is a network that is not allowed to obtain the data of the terminal device, the first response message is used to reject providing the data of the terminal device. In this implementation, the first response message may be understood as a reject message, and the reject message may include information indicating a reject cause.

In still another possible implementation, when the first network is a network that is not allowed to obtain the data of the terminal device, the first response message includes the GPSI or a pseudonym of the terminal device. The pseudonym is generated by the first network element or the storage function network element, and the first network element or the storage function network element stores a correspondence between the SUPI/GPSI and the pseudonym.

The embodiment shown in FIG. 4 may be applied to the location scenario shown in FIG. 2. For example, the second network is a public network, the first network is a local network, the first network element is the UDM in the second network, and the second network element is the GMLC in the first network. The following describes, with reference to a specific example, how to implement location in a location scenario while ensuring that user data stored in the public network is not leaked.

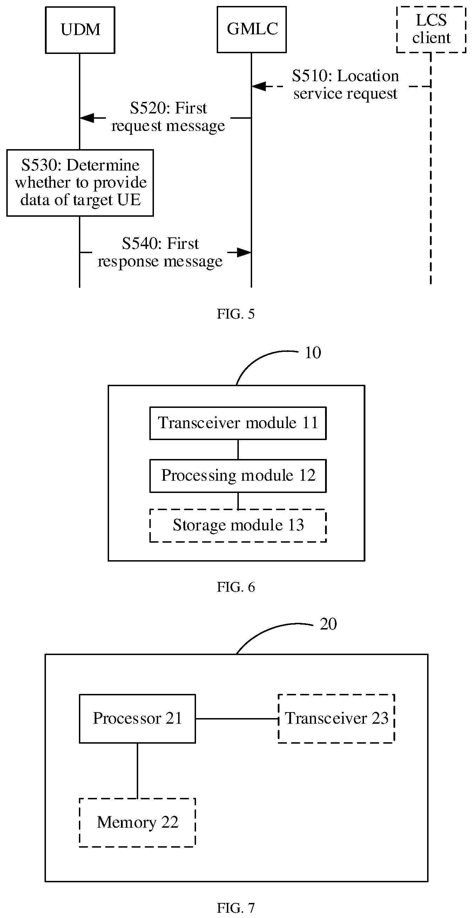

Example 1: FIG. 5 is a diagram of a communication method applied to a location scenario according to an embodiment of this application. The method includes the following steps.

S510: A location client (or an application function network element) initiates a location service request to a GMLC.

Specifically, the location service request (an LCS service request) carries identification information of target UE. The identification information of the target UE may be a GPSI or an SUPI of the target UE.

For example, the location client or the application function network element may directly send the location service request to the GMLC, or may send the location request message to the GMLC through a NEF.

S520: The GMLC sends a first request message to a UDM, in other words, the UDM receives the first request message from the GMLC.

Specifically, the first request message is used to request data of the target UE. The data of the target UE includes but is not limited to one or more of the SUPI of the target UE, a privacy setting of the target UE, or an address of an AMF serving the target UE. For a description related to the first request message, refer to the description of the first request message in step S410 in the communication method in FIG. 4. Details are not described herein again.

For example, the first request message is a Nudm_SDM_Get or Nudm_UECM_Get request message.

S530: The UDM determines, based on locally stored information, whether to provide the data of the target UE.

For example, in this embodiment, on the premise of determining that a first network to which the GMLC belongs and a second network to which the UDM belongs are in different network domains or security domains, the UDM further determines whether to provide the data of the target UE.

For example, before the UDM determines whether to provide the data of the target UE, the UDM determines that the GMLC and the UDM belong to different network domains or security domains. That the GMLC and the UDM belong to different network domains may be understood as that an identifier of the network to which the GMLC belongs is different from an identifier of the network to which the UDM belongs. A security domain is an effective method for dividing an entire system from a security perspective and implementing security-level protection for a large-scale complex information system. That the GMLC and the UDM belong to different security domains may be understood as that the GMLC and the UDM belong to different security levels.

Optionally, when the GMLC and the UDM belong to different network domains, the GMLC and the UDM belong to different security domains; or when the GMLC and the UDM belong to a same network domain, but security levels of the GMLC and the UDM are different, the GMLC and the UDM belong to different security domains. When the UDM and the GMLC belong to different network domains (security domains), if the GMLC directly obtains the data of the target UE from the UDM through an interface between the GMLC and the UDM, and the UDM directly provides the data of the target UE, the data of the target UE may be leaked, and security is not ensured. Therefore, in this embodiment, when the UDM determines that the UDM and the GMLC belong to different security domains, the UDM needs to further determine whether to provide the data of the target UE.

For example, in this embodiment, the UDM may determine, in the following several implementations, that the UDM and the GMLC belong to different network domains.

In a possible implementation, the UDM determines, based on the identifier of the first network included in the first request message, that the GMLC and the UDM belong to different network domains.

In another possible implementation, the UDM first determines the identifier of the first network based on an IP address of the GMLC, and then determines, based on the identifier of the first network, that the GMLC and the UDM belong to different network domains.

In still another possible implementation, the UDM first determines the identifier of the first network based on a certificate of the GMLC, and then determines, based on the identifier of the first network, that the GMLC and the UDM belong to different network domains.

For example, the certificate of the GMLC carries the identifier of the first network. In a process of establishing a secure connection between the UDM and the GMLC, the UDM obtains the certificate of the GMLC, stores the identifier of the first network, and determines, based on the identifier of the first network in the certificate, the information about the first network to which the GMLC belongs.

In still another possible implementation, the UDM determines, based on information sent by another network element (for example, a gateway), information about the network to which the GMLC belongs.

For example, the GMLC is connected to the UDM through another network, and the another network element has a capability of sensing the information about the network to which the GMLC belongs, and reports, to the UDM, the information about the first network to which the GMLC belongs.

In correspondence to the embodiment shown in FIG. 4, in this embodiment, that the UDM determines, based on the locally stored information, whether to provide the data of the target UE includes the following three possibilities.

Possibility 1: The UDM determines, based on the local configuration information, whether the first network is a network that is allowed to obtain the data of the terminal device, where the configuration information includes a list of identifiers of networks that are allowed to obtain the data of the terminal device.

Specifically, in the case shown in Possibility 1, in response to the first request message, the UDM determines whether the first network is a network that is allowed to obtain the data of the target UE, and obtains a determining result, where the determining result indicates whether the first network is a network that is allowed to obtain the data of the target UE. Further, after obtaining the determining result, a first network element determines, based on the determining result, whether to send the data of the target UE to the GMLC.

If the identifier of the first network belongs to the list of identifiers of networks that are allowed to obtain the data of the terminal device, the UDM determines that the first network is a network that is allowed to obtain the data of the terminal device; or
if the identifier of the first network does not belong to the list of identifiers of networks that are allowed to obtain the data of the terminal device, the UDM determines that the first network is a network that is not allowed to obtain the data of the terminal device.

Optionally, the local configuration information further includes a list of identifiers of terminal devices that allow the network to obtain data.

If an identifier of the target terminal device belongs to the list of identifiers of terminal devices that allow the first network to obtain data, the UDM determines that the first network is a network that is allowed to obtain the data of the terminal device; or
if an identifier of the target terminal device does not belong to the list of identifiers of terminal devices that allow the first network to obtain data, the UDM determines that the first network is a network that is not allowed to obtain the data of the terminal device.

For ease of understanding, the following describes, with reference to a specific example, how the UDM determines whether to provide the data of the target terminal device for the GMLC in the case shown in Possibility 1.

For example, a local network is a campus network of an enterprise, and provides services only for employees and devices of the enterprise. The enterprise can provide a binding relationship between a local network identifier and UE (for example, UE #2 and UE #3) identifiers of the employees and the devices of the enterprise, and the binding relationship is stored in the UDM in a public network. When UE (for example, UE #1) is not a user of the local network, there is no binding or subscription relationship between an identifier of UE #1 and the local network identifier. If the GMLC requests data of UE #1 via the first request message, the UDM determines, based on subscription data, that there is no binding/subscription relationship between UE #1 and the local network, and rejects sending the UE data of UE #1 to the GMLC. If the GMLC requests data of UE #3 via the first request message, the UDM determines, based on subscription data, that there is a binding/subscription relationship between UE #3 and the local network, and sends the UE data of UE #3 to the GMLC.

Possibility 2: The UDM determines, based on an application scope of the data of the terminal device and an application scope of the first network, information included in a first response message sent to the GMLC.

For example, the data of the target terminal device includes data #1 and data #2, an application scope of data #1 is scope #1, an application scope of data #2 is scope #2, and the application scope of the first network is scope #3.

If an intersection set exists between scope #3 and scope #1, the UDM determines that the first response message includes data #1.

If an intersection set exists between scope #3 and scope #2, the UDM determines that the first response message includes data #2.

If an intersection set exists between scope #3 and each of scope #1 and scope #2, the UDM determines that the first response message includes data #1 and data #1.

If no intersection set exists between scope #3 and each of scope #1 and scope #2, the UDM determines that the first response message includes information about rejecting providing the data of the target terminal device.

For ease of understanding, the following describes, with reference to a specific example, how the UDM determines whether to provide the data of the target terminal device for the GMLC in the case shown in Possibility 2.

For example, a local network is a campus network of an enterprise, and an application scope of the network is scope #1. The enterprise can provide a binding relationship between a local network identifier and scope #1, and the binding relationship is stored in the UDM in a public network. In addition, the UDM in the public network further stores a binding relationship between an identifier of at least one UE and an application scope of data of the UE. When the local network requests to obtain data of UE (for example, UE #1), the UDM determines, based on a binding relationship between an identifier of UE #1 and an application scope of data of UE, an application scope of the data of UE #1 (for example, an application scope of data #1 of UE #1 is scope #1, and an application scope of data #2 of UE #1 is scope #2). The UDM determines, based on the local network identifier and the identifier of UE #1, that an intersection set exists between the application scope of the local network and the application scope of data #1 of UE #1, and determines to provide data #1 of UE #1 for the GMLC; the UDM determines, based on the local network identifier and the identifier of UE #1, that an intersection set exists between the application scope of the local network and the application scope of data #2 of UE #1, and determines to provide data #2 of UE #1 for the GMLC; or the UDM determines, based on the local network identifier and the identifier of UE #1, that no intersection set exists between the application scope of the local network and each of the application scope of data #1 of UE #1 and the application scope of data #2 of UE #1, and determines not to provide the data of UE #1 for the GMLC.

Possibility 3: The UDM determines, based on the AMF serving the target terminal device and an AMF corresponding to the first network, whether to allow sending the data of the target terminal device to the first network. The AMF corresponding to the first network is determined based on second configuration information, where the second configuration information includes a correspondence between an identifier of at least one network and an identifier of at least one mobility management network element in the second network.

If the AMF serving the target terminal device is a subset of the AMF corresponding to the first network, the UDM determines to allow sending the data of the target terminal device to the first network; or

if the AMF serving the target terminal device is not a subset of the AMF corresponding to the first network, the UDM determines not to allow sending the data of the target terminal device to the first network.

For ease of understanding, the following describes, with reference to a specific example, how the UDM determines whether to provide the data of the target terminal device for the GMLC in the case shown in Possibility 3.

For example, a local network is a campus network of an enterprise, the enterprise can provide a binding relationship between a local network identifier and AMF #1 in a public network, and the binding relationship is stored in the UDM in the public network. When the local network requests to obtain data of UE (for example, UE #1), the UDM determines that an AMF serving UE #1 is AMF #2, and rejects sending the UE data of UE #1 to the GMLC because no intersection set exists between AMF #1 and AMF #2; or the UDM determines that an AMF serving UE #1 is AMF #1, and sends the UE data of UE #1 to the GMLC because no intersection set exists between AMF #1 and AMF #1.

S540: The UDM sends a first response message to the GMLC, in other words, the GMLC receives the first response message from the UDM.

For example, the first response message is a Nudm_SDM_Get or Nudm_UECM_Get response message. If the first response message includes the data of the target UE, for a subsequent location procedure, refer to descriptions of a current conventional technology. This is not limited in this application.

If the first response message does not include the data of the target UE, or the first response message is a reject message or carries a reject indication, this location ends.

In the location procedure shown in FIG. 5, before providing the data for the GMLC, the UDM needs to perform verification based on the locally stored information (for example, the subscription data of the terminal device, first configuration information, or the second configuration information), and provides the data for the GMLC only when the GMLC can obtain the data of the terminal device, so that the GMLC can obtain only data of a part of UE, avoiding data leakage. It should be noted that the example shown in FIG. 5 is merely for ease of understanding, and does not constitute any limitation on a scenario to which the communication method provided in this application can be applied. The communication method provided in this application can be further used in another scenario in which the second network element in the first network requests to obtain user data in the second network. Details are not described in this application.

It should be understood that sequence numbers of the foregoing processes do not mean an execution sequence. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device (for example, a GMLC or a UDM) in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, the methods and the operations implemented by the UDM may also be implemented by a component that can be used for the UDM, and the methods and the operations implemented by the GMLC may also be implemented by a component that can be used for the GMLC.

The foregoing describes in detail the communication methods provided in embodiments of this application with reference to FIG. 4 and FIG. 5. The foregoing communication methods are mainly described from a perspective of interaction between terminal devices. It may be understood that, to implement the foregoing functions, the terminal device includes a corresponding hardware structure and/or software module for performing the functions.

A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for the particular applications, but it should not be considered that the implementation goes beyond the scope of this application.

The following describes in detail communication apparatuses provided in embodiments of this application with reference to FIG. 6 to FIG. 8. It should be understood that descriptions of apparatus embodiments correspond to the descriptions of the method embodiments. Therefore, for content that is not described in detail, refer to the foregoing method embodiments. For brevity, a part of content is not described again.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division based on each corresponding function.

FIG. 6 is a block diagram of a communication apparatus 10 according to an embodiment of this application. The apparatus 10 includes a transceiver module 11 and a processing module 12. The transceiver module 11 can implement a corresponding communication function. The processing module 12 is configured to perform data processing. In other words, the transceiver module 11 is configured to perform receiving and sending related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement an action of the device or the network element in the foregoing method embodiments.

In a first design, the apparatus 10 may correspond to the GMLC in the foregoing method embodiments, or may be a component (for example, a chip) of the GMLC.

The apparatus 10 can implement corresponding steps or procedures performed by the GMLC in the foregoing method embodiments. The transceiver module 11 may be configured to perform receiving and sending related operations of the GMLC in the foregoing method embodiments. The processing module 12 may be configured to perform processing-related operations of the GMLC in the foregoing method embodiments.

In a possible implementation, the transceiver module 11 is configured to send a first request message to a storage function network element in a second network, where the first request message includes an identifier of a terminal device, and the first request message is used to request to obtain data of the terminal device; and the transceiver module 11 is further configured to receive a first response message from the storage function network element in the second network, where information included in the first response message includes the data of the terminal device, rejection information, or a generic public subscription identifier GPSI or a pseudonym of the terminal device.

When the apparatus 10 is configured to perform the method in FIG. 4, the transceiver module 11 may be configured to perform steps of sending information in the method, for example, steps S410 and S420, and the processing module 12 may be configured to perform a processing step in the method.

When the apparatus 10 is configured to perform the method in FIG. 5, the transceiver module 11 may be configured to perform steps of sending information in the method, for example, steps S510, S520, and S540, and the processing module 12 may be configured to perform a processing step in the method.

It should be understood that a specific process in which the units perform the foregoing corresponding steps is described in detail in the foregoing method embodiments. For brevity, details are not described herein again.

In a second design, the apparatus 10 may correspond to the UDM in the foregoing method embodiments, or may be a component (for example, a chip) of the UDM.

The apparatus 10 can implement corresponding steps or procedures performed by the UDM in the foregoing method embodiments. The transceiver module 11 may be configured to perform receiving and sending related operations of the UDM in the foregoing method embodiments. The processing module 12 may be configured to perform processing-related operations of the UDM in the foregoing method embodiments.

In a possible implementation, the transceiver module 11 is configured to receive a first request message from a gateway mobile location center GMLC in a first network, where the first request message includes an identifier of a terminal device, and the first request message is used to request to obtain data of the terminal device; the processing module 12 is configured to determine, in response to the first request message, whether the first network is a network that is allowed to obtain the data of the terminal device; and the processing module 12 is further configured to determine, based on a determining result, whether to send the data of the terminal device to the GMLC.

When the apparatus 10 is configured to perform the method in FIG. 4, the transceiver module 11 may be configured to perform steps of receiving and sending information in the method, for example, steps S410, S421, S423, S431, S433, S441, S443, S451, S453, and S420, and the processing module 12 may be configured to perform processing steps in the method, for example, steps S411, S422, S424, S432, S434, S442, S444, and S452.

When the apparatus 10 is configured to perform the method in FIG. 5, the transceiver module 11 may be configured to perform steps of receiving and sending information in the method, for example, steps S520 and S540, and the processing module 12 may be configured to perform a processing step in the method, for example, step S530.

It should be understood that a specific process in which the units perform the foregoing corresponding steps is described in detail in the foregoing method embodiments. For brevity, details are not described herein again.

It should be further understood that the apparatus 10 herein is embodied in a form of a functional module. The term "module" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 10 may be specifically the mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in the foregoing solutions has a function of implementing corresponding steps performed by the network element (for example, the first network element or the second network element) in the foregoing methods. The function may be implemented by hardware, or may be implemented by hardware executing corresponding software. The hardware or software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to respectively perform receiving and sending operations and processing related operations in the method embodiments.

In addition, the transceiver module 11 may alternatively be a transceiver circuit (for example, may include a receiving circuit and a sending circuit), and the processing module may be a processing circuit.

FIG. 7 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 7, the apparatus 20 further includes the memory 22, and the memory 22 is configured to store the computer program or the instructions and/or the data. The memory 22 and the processor 21 may be integrated, or may be disposed separately. Optionally, there are one or more memories 22.

Optionally, as shown in FIG. 7, the apparatus 20 further includes a transceiver 23. The transceiver 23 is configured to receive a signal and/or send a signal. For example, the processor 21 is configured to control the transceiver 23 to receive a signal and/or send a signal.

In a solution, the apparatus 20 is configured to implement operations performed by the GMLC in the foregoing method embodiments.

In another solution, the apparatus 20 is configured to implement operations performed by the UDM in the foregoing method embodiments.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It should be further understood that the memory in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described in this specification is intended to include, but is not limited to, these and any other appropriate type of memory.

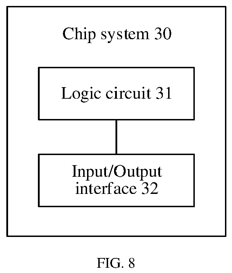

FIG. 8 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the GMLC in the foregoing method embodiments.

For example, the logic circuit 31 is configured to implement processing-related operations performed by the GMLC in the foregoing method embodiments, and the input/output interface 32 is configured to implement sending and/or receiving related operations performed by the GMLC in the foregoing method embodiments.

In another solution, the chip system 30 is configured to implement operations performed by the UDM in the foregoing method embodiments.

For example, the logic circuit 31 is configured to implement processing-related operations performed by the UDM in the foregoing method embodiments, and the input/output interface 32 is configured to implement sending and/or receiving related operations performed by the UDM in the foregoing method embodiments.

An embodiment of this application further provides a computer-readable storage medium. The computer-readable storage medium stores computer instructions for implementing the methods performed by the network elements in the foregoing method embodiments.

For example, when a computer program is executed by a computer, the computer is enabled to implement the methods performed by the GMLC or the UDM in the foregoing method embodiments.

An embodiment of this application further provides a computer program product, including instructions. When the instructions are executed by a computer, the methods performed by the device (for example, the GMLC or UDM) in the foregoing method embodiments is implemented.

An embodiment of this application further provides a communication system, including the foregoing GMLC and UDM.

For explanations and beneficial effects of related content of any one of the apparatuses provided above, refer to the corresponding method embodiments provided above. Details are not described herein again.

In the several embodiments provided in this application, it should be understood that the disclosed apparatuses and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions described in embodiments of this application are produced. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a gateway mobile location center in a first network, a first request message to a storage function network element in a second network, wherein the first request message comprises an identifier of a terminal device, and the first request message is used to request to obtain data of the terminal device;
determining, by the storage function network element in response to the first request message, whether the first network is a network that is allowed to obtain the data of the terminal device; and
determining, by the storage function network element based on a determining result, whether to send the data of the terminal device to the gateway mobile location center.

2. The method according to claim 1, wherein before determining, by the storage function network element, whether the first network is a network that is allowed to obtain the data of the terminal device, the method further comprises:
determining, by the storage function network element, that the gateway mobile location center and the storage function network element belong to different network domains.

3. The method according to claim 2, wherein determining, by the storage function network element, that the gateway mobile location center and the storage function network element belong to different network domains comprises any one of the following:
determining, by the storage function network element based on an identifier of the first network comprised in the first request message, that the gateway mobile location center and the storage function network element belong to different network domains;
determining, by the storage function network element, an identifier of the first network based on an internet protocol address of the gateway mobile location center, and determining, based on the identifier of the first network, that the gateway mobile location center and the storage function network element belong to different network domains; or
determining, by the storage function network element, an identifier of the first network based on a certificate of the gateway mobile location center, and determining, based on the identifier of the first network, that the gateway mobile location center and the storage function network element belong to different network domains.

4. The method according to any one of claims 1 to 3, wherein determining, by the storage function network element, whether the first network is a network that is allowed to obtain the data of the terminal device comprises:
determining, by the storage function network element based on local configuration information, whether the first network is a network that is allowed to obtain the data of the terminal device, wherein the configuration information comprises a list of identifiers of networks that are allowed to obtain the data of the terminal device.

5. The method according to claim 4, wherein determining, by the storage function network element based on the local configuration information, whether the first network is a network that is allowed to obtain the data of the terminal device comprises:
if the identifier of the first network belongs to the list of identifiers of networks that are allowed to obtain the data of the terminal device, determining, by the storage function network element, that the first network is a network that is allowed to obtain the data of the terminal device; or
if the identifier of the first network does not belong to the list of identifiers of networks that are allowed to obtain the data of the terminal device, determining, by the storage function network element, that the first network is a network that is not allowed to obtain the data of the terminal device.

6. The method according to any one of claims 1 to 3, wherein determining, by the storage function network element, whether the first network is a network that is allowed to obtain the data of the terminal device comprises:
determining, by the storage function network element based on a correspondence between a mobility management network element serving the terminal device and a mobility management network element corresponding to the first network, whether the first network is a network that is allowed to obtain the data of the terminal device.

7. The method according to claim 6, wherein determining, by the storage function network element based on the correspondence between a mobility management network element serving the terminal device and a mobility management network element corresponding to the first network, whether the first network is a network that is allowed to obtain the data of the terminal device comprises:
if the mobility management network element serving the terminal device is a subset of the mobility management network element corresponding to the first network, determining, by the storage function network element, that the first network is a network that is allowed to obtain the data of the terminal device, or
if the mobility management network element serving the terminal device is not a subset of the mobility management network element corresponding to the first network, determining, by the storage function network element, that the first network is a network that is not allowed to obtain the data of the terminal device.

8. The method according to any one of claims 1 to 7, wherein determining, by the storage function network element based on the determining result, whether to send the data of the terminal device to the gateway mobile location center comprises:
when the determining result is that the first network is a network that is not allowed to obtain the data of the terminal device, rejecting, by the storage function network element, sending the data of the terminal device to the gateway mobile location center.

9. The method according to any one of claims 1 to 7, wherein determining, by the storage function network element based on the determining result, whether to send the data of the terminal device to the gateway mobile location center comprises:
when the determining result is that the first network is a network that is not allowed to obtain the data of the terminal device, sending, by the storage function network element, a generic public subscription identifier GPSI or a pseudonym of the terminal device to the gateway mobile location center.

10. The method according to any one of claims 1 to 7, wherein determining, by the storage function network element based on the determining result, whether to send the data of the terminal device to the gateway mobile location center comprises:
when the determining result is that the first network is a network that is allowed to obtain the data of the terminal device, sending, by the storage function network element, the data of the terminal device to the gateway mobile location center.

11. The method according to any one of claims 1 to 10, wherein the data of the terminal device comprises at least one of the following:
a subscription permanent identifier of the terminal device, a privacy setting of the terminal device, or an address of the mobility management network element serving the terminal device.

12. The method according to any one of claims 1 to 11, wherein the second network is a public network, and the first network is a local network.

13. The method according to any one of claims 1 to 12, wherein the first request message comprises the identifier of the first network.

14. The method according to any one of claims 1 to 13, wherein before sending, by the gateway mobile location center, the first request message to the storage function network element, the method further comprises:
receiving, by the gateway mobile location center, a location service request from a mobile location service client, wherein the location service request comprises the identifier of the terminal device.

15. A communication method, comprising:
receiving, by a storage function network element in a second network, a first request message from a gateway mobile location center in a first network, wherein the first request message comprises an identifier of a terminal device, and the first request message is used to request to obtain data of the terminal device;
determining, by the storage function network element in response to the first request message, whether the first network is a network that is allowed to obtain the data of the terminal device; and
determining, by the storage function network element based on a determining result, whether to send the data of the terminal device to the gateway mobile location center.

16. The method according to claim 15, wherein before determining, by the storage function network element, whether the first network is a network that is allowed to obtain the data of the terminal device, the method further comprises:
determining, by the storage function network element, that the gateway mobile location center and the storage function network element belong to different network domains.

17. The method according to claim 16, wherein determining, by the storage function network element, that the gateway mobile location center and the storage function network element belong to different network domains comprises any one of the following:
determining, by the storage function network element based on an identifier of the first network comprised in the first request message, that the gateway mobile location center and the storage function network element belong to different network domains;
determining, by the storage function network element, an identifier of the first network based on an internet protocol address of the gateway mobile location center, and determining, based on the identifier of the first network, that the gateway mobile location center and the storage function network element belong to different network domains; or
determining, by the storage function network element, an identifier of the first network based on a certificate of the gateway mobile location center, and determining, based on the identifier of the first network, that the gateway mobile location center and the storage function network element belong to different network domains.

18. The method according to any one of claims 15 to 17, wherein determining, by the storage function network element, whether the first network is a network that is allowed to obtain the data of the terminal device comprises:
determining, by the storage function network element based on local configuration information, whether the first network is a network that is allowed to obtain the data of the terminal device, wherein the configuration information comprises a list of identifiers of networks that are allowed to obtain the data of the terminal device.

19. The method according to claim 18, wherein determining, by the storage function network element based on the local configuration information, whether the first network is a network that is allowed to obtain the data of the terminal device comprises:
if the identifier of the first network belongs to the list of identifiers of networks that are allowed to obtain the data of the terminal device, determining, by the storage function network element, that the first network is a network that is allowed to obtain the data of the terminal device; or
if the identifier of the first network does not belong to the list of identifiers of networks that are allowed to obtain the data of the terminal device, determining, by the storage function network element, that the first network is a network that is not allowed to obtain the data of the terminal device.

20. The method according to any one of claims 15 to 17, wherein determining, by the storage function network element, whether the first network is a network that is allowed to obtain the data of the terminal device comprises:
determining, by the storage function network element based on a correspondence between a mobility management network element serving the terminal device and a mobility management network element corresponding to the first network, whether the first network is a network that is allowed to obtain the data of the terminal device.

21. The method according to claim 20, wherein determining, by the storage function network element based on the correspondence between a mobility management network element serving the terminal device and a mobility management network element corresponding to the first network, whether the first network is a network that is allowed to obtain the data of the terminal device comprises:
if the mobility management network element serving the terminal device is a subset of the mobility management network element corresponding to the first network, determining, by the storage function network element, that the first network is a network that is allowed to obtain the data of the terminal device, or
if the mobility management network element serving the terminal device is not a subset of the mobility management network element corresponding to the first network, determining, by the storage function network element, that the first network is a network that is not allowed to obtain the data of the terminal device.

22. The method according to any one of claims 15 to 21, wherein determining, by the storage function network element based on the determining result, whether to send the data of the terminal device to the gateway mobile location center comprises:
when the determining result is that the first network is a network that is not allowed to obtain the data of the terminal device, rejecting, by the storage function network element, sending the data of the terminal device to the gateway mobile location center.

23. The method according to any one of claims 15 to 21, wherein determining, by the storage function network element based on the determining result, whether to send the data of the terminal device to the gateway mobile location center comprises:
when the determining result is that the first network is a network that is not allowed to obtain the data of the terminal device, sending, by the storage function network element, a generic public subscription identifier or a pseudonym of the terminal device to the gateway mobile location center.

24. The method according to any one of claims 15 to 21, wherein determining, by the storage function network element based on the determining result, whether to send the data of the terminal device to the gateway mobile location center comprises:
when the determining result is that the first network is a network that is allowed to obtain the data of the terminal device, sending, by the storage function network element, the data of the terminal device to the gateway mobile location center.

25. The method according to any one of claims 15 to 24, wherein the data of the terminal device comprises at least one of the following:
a subscription permanent identifier of the terminal device, a privacy setting of the terminal device, or an address of the mobility management network element serving the terminal device.

26. The method according to any one of claims 15 to 24, wherein the second network is a public network, and the first network is a local network.

27. The method according to any one of claims 15 to 25, wherein the first request message comprises the identifier of the first network.

28. A communication method, comprising:
receiving, by a first network element in a second network, a first request message from a second network element in a first network, wherein the first request message comprises an identifier of a terminal device, and the first request message is used to request to obtain data of the terminal device; and
sending, by the first network element, a first response message in response to the first request message to the second network element, wherein information comprised in the first response message is determined based on a verification result, and the verification result indicates whether the first network is a network that is allowed to obtain the data of the terminal device.

29. The method according to claim 28, wherein when the first network is a network that is not allowed to obtain the data of the terminal device, the first response message is used to reject providing the data of the terminal device.

30. The method according to claim 28 or 29, wherein when the first network is a network that is not allowed to obtain the data of the terminal device, the first response message comprises a generic public subscription identifier or a pseudonym of the terminal device.

31. The method according to any one of claims 28 to 30, wherein before sending, by the first network element, the first response message to the second network element, the method further comprises: determining, by the first network element, the verification result; or receiving, by the first network element, the verification result from a storage function network element in the second network.

32. The method according to claim 31, wherein determining, by the first network element, the verification result comprises:
determining, by the first network element, the verification result based on first information, wherein the first information comprises subscription data of the terminal device and/or a list of identifiers of terminal devices that allow the first network to obtain data, the subscription data of the terminal device comprises a correspondence between the identifier of the terminal device and an identifier of at least one network, and the at least one network is a network that is allowed to obtain the data of the terminal device.

33. The method according to claim 32, wherein before determining, by the first network element, the verification result, the method further comprises:
sending, by the first network element, a second request message to the storage function network element in the second network, wherein the second request message comprises the identifier of the terminal device and/or an identifier of the second network, and the second request message is used to request to obtain the first information; and receiving, by the first network element, the first information from the storage function network element.

34. The method according to claim 32 or 33, wherein determining, by the first network element, the verification result based on the subscription data of the terminal device comprises:
if an identifier of the first network is one of the identifier of the at least one network, determining, by the first network element, that the first network is a network that is allowed to obtain the data of the terminal device;
if an identifier of the first network is not one of the identifier of the at least one network, determining, by the first network element, that the first network is a network that is not allowed to obtain the data of the terminal device;
if the identifier of the terminal device is one of the list of identifiers of terminal devices that allow the first network to obtain data, determining, by the first network element, that the first network is a network that is allowed to obtain the data of the terminal device; or
if the identifier of the terminal device is not one of the list of identifiers of terminal devices that allow the first network to obtain data, determining, by the first network element, that the first network is a network that is not allowed to obtain the data of the terminal device.

35. The method according to claim 34, wherein determining, by the first network element, the verification result comprises:
determining, by the first network element, the verification result based on an application scope of the data of the terminal device and an application scope of the first network, wherein the subscription data of the terminal device comprises information about the application scope of the data of the terminal device, the application scope of the first network is determined based on first configuration information, and the first configuration information comprises information about an application scope of at least one network.

36. The method according to claim 35, wherein before determining, by the first network element, the verification result, the method further comprises:
sending, by the first network element, a third request message to the storage function network element in the second network, wherein the third request message comprises the identifier of the terminal device, and the third request message is used to request to obtain the subscription data of the terminal device; and
receiving, by the first network element, the subscription data of the terminal device from the storage function network element.

37. The method according to claim 36, wherein before determining, by the first network element, the verification result, the method further comprises:
sending, by the first network element, a fourth request message to the storage function network element in the second network, wherein the fourth request message comprises the identifier of the first network, and the fourth request message is used to request to obtain information about the application scope of the first network; and
receiving, by the first network element, the information about the application scope of the first network from the storage function network element.

38. The method according to any one of claims 35 to 37, wherein the data of the terminal device comprises first data and second data, an application scope of the first data is a first scope, an application scope of the second data is a second scope, and determining, by the first network element, the verification result based on the application scope of the data of the terminal device and the application scope of the first network comprises:
if an intersection set exists between the application scope of the first network and the first scope, determining, by the first network element, that the first network is a network that is allowed to obtain the first data, wherein the first response message comprises the first data;
if an intersection set exists between the application scope of the first network and the second scope, determining, by the first network element, that the first network is a network that is allowed to obtain the second data, wherein the first response message comprises the second data;
if an intersection set exists between the application scope of the first network and each of the first scope and the second scope, determining, by the first network element, that the first network is a network that is allowed to obtain the first data and the second data, wherein the first response message comprises the first data and the second data; or
if no intersection set exists between the application scope of the first network and the application scope of the data of the terminal device, determining, by the first network element, that the first network is a network that is not allowed to obtain the data of the terminal device.

39. The method according to claim 38, wherein determining, by the first network element, the verification result comprises:
determining, by the first network element, the verification result based on a mobility management network element serving the terminal device and a mobility management network element corresponding to the first network, wherein the mobility management network element corresponding to the first network is determined based on second configuration information, and the second configuration information comprises a correspondence between an identifier of at least one network and an identifier of at least one mobility management network element in the second network.

40. The method according to claim 39, wherein before determining, by the first network element, the verification result, the method further comprises:
sending, by the first network element, a fifth request message to the storage function network element in the second network, wherein the fifth request message comprises the identifier of the first network, and the fifth request message is used to request to obtain an identifier of the mobility management network element corresponding to the first network; and
receiving, by the first network element, the identifier of the mobility management network element corresponding to the first network from the storage function network element.

41. The method according to claim 39 or 40, wherein determining, by the first network element, the verification result based on a relationship between the mobility management network element corresponding to the first network and the mobility management network element serving the terminal device comprises:
if the mobility management network element serving the terminal device is a subset of the mobility management network element corresponding to the first network, determining, by the first network element, that the first network is a network that is allowed to obtain the data of the terminal device; or
if the mobility management network element serving the terminal device is not a subset of the mobility management network element corresponding to the first network, determining, by the first network element, that the first network is a network that is not allowed to obtain the data of the terminal device.

42. The method according to any one of claims 39 to 41, wherein before receiving, by the first network element, the verification result from a storage function network element in the first network, the method further comprises:
sending, by the first network element, a sixth request message to the storage function network element, wherein the sixth request message comprises the identifier of the first network and/or an identifier of the target terminal device, and the sixth request message is used to request to obtain the verification result.

43. The method according to any one of claims 28 to 42, wherein the data of the terminal device comprises at least one of the following:
a subscription permanent identifier of the terminal device, a privacy setting of the terminal device, or the mobility management network element serving the terminal device.

44. The method according to any one of claims 28 to 43, wherein the second network is a public network, and the first network is a local network.

45. The method according to any one of claims 28 to 44, wherein the first network element is a unified data management function network element, an authentication server function network element, or a network data analytics function network element; and the second network element is a gateway mobile location center, a mobility management function network element, or a session management function network element.

46. A communication apparatus, wherein the apparatus is configured to perform the steps performed by the storage function network element in the method according to any one of claims 1 to 45.

47. A communication apparatus, comprising:
a memory, configured to store a computer program; and
a processor, configured to execute the computer program stored in the memory, to enable the communication apparatus to perform the steps performed by the storage function network element in the method according to any one of claims 1 to 45.

48. A computer-readable storage medium, wherein the computer-readable storage medium stores computer instructions, and when the computer instructions are run on a computer, the steps performed by the storage function network element in the method according to any one of claims 1 to 45 are performed.

49. A computer program product, wherein the computer program product comprises instructions used to perform the steps performed by the storage function network element in the method according to any one of claims 1 to 45.
